# EUROPÄISCHE PATENTSCHRIFT

(11) **EP 3 662 734 B1**
(45) Veröffentlichungstag und Bekanntmachung des Hinweises auf die Patenterteilung: **27.03.2024**
(21) Anmeldenummer: 19211712.5
(22) Anmeldetag: 27.11.2019
(51) Int. Cl.: A01C 15/04, A01C 21/00

(54) **STEUERUNGS- UND/ODER REGELUNGSSYSTEM FÜR EINE LANDWIRTSCHAFTLICHE VERTEILMASCHINE, LANDWIRTSCHAFTLICHE VERTEILMASCHINE UND VERFAHREN ZUR STEUERUNG- UND/ODER REGELUNG EINER LANDWIRTSCHAFTLICHEN VERTEILMASCHINE**
CONTROL AND / OR REGULATING SYSTEM FOR AN AGRICULTURAL DISTRIBUTION MACHINE, AGRICULTURAL DISTRIBUTION MACHINE AND METHOD FOR CONTROLLING AND/ OR REGULATING AN AGRICULTURAL DISTRIBUTION MACHINE
SYSTÈME DE COMMANDE ET / OU DE RÉGULATION POUR UNE MACHINE DE DISTRIBUTION AGRICOLE, MACHINE DE DISTRIBUTION AGRICOLE ET PROCÉDÉ DE COMMANDE ET / OU DE RÉGULATION D'UNE MACHINE DE DISTRIBUTION AGRICOLE

(30) Priorität: 05.12.2018 DE 102018131073
(43) Veröffentlichungstag der Anmeldung: 10.06.2020
(73) Patentinhaber: HORSCH LEEB Application Systems GmbH, 94405 Landau an der Isar (DE)
(72) Erfinder: LEEB, Theodor, 94562 Oberpöring (DE)
(74) Vertreter: Benninger, Johannes

(56) Entgegenhaltungen:
- EP-A1- 2 829 177
- EP-A1- 2 870 850
- US-A- 4 793 742
- US-A- 5 626 296

## Beschreibung

Die Erfindung betrifft ein Steuerungs- und/oder Regelungssystem für eine landwirtschaftliche Verteilmaschine, insbesondere einen pneumatischen Düngerstreuer, zum Ausbringen von körnigem landwirtschaftlichem Streugut. Die Erfindung betrifft zudem eine landwirtschaftliche Verteilmaschine mit einem derartigen Steuerungs- und/oder Regelungssystem sowie ein Verfahren zur Steuerung- und/oder Regelung einer landwirtschaftlichen Verteilmaschine.

Zur großflächigen Verteilung von körnigem bzw. granularem landwirtschaftlichen Streugut, insbesondere zur Verteilung von landwirtschaftlichem Dünger, sind aus dem Stand der Technik als landwirtschaftliche Verteilmaschinen sog. Düngersteuer, insbesondere pneumatische Düngerstreuer bekannt.

Bei derartigen Düngerstreuern wird das Streugut aus einem Vorratsbehälter, mittels den Vorratsbehältern räumlich zugeordneten Dosiervorrichtungen, in einen Luftstrom dosiert und mittels dieses Luftstroms vom Vorratstank über eine Vielzahl von Rohrleitungen zu einer entsprechenden Anzahl von an einem Verteilgestänge angebrachten Verteilleitungen gefördert. An den Verteilleitungen sind in der Regel sog. Prallteller angebracht, gegen welche das Streugut mittels des Luftstroms gefördert und anschließend durch mittels der Prallteller erzeugter Streufächer ganzflächig verteilt wird. Insbesondere ist bei einer derartigen Ausführungsvariante vorgesehen, dass jede Teilbreite eine, dem Vorratsbehälter räumlich zugeordnete Dosiervorrichtung, eine zwischen dem Vorratsbehälter und dem Verteilgestänge angeordnete Rohrleitung bzw. Schlauchleitung sowie eine Verteilleitung, in welche die Rohrleitung mündet und an welchem ein Prallteller angebracht ist, umfasst. Durch Abschaltung einzelner Dosiervorrichtungen lassen sich mittels derartiger Düngersteuer auch teilflächenspezifische Anwendungen (z.B. Section-Control-Anwendungen) realisieren. Derartige Düngerstreuer sind jedoch, aufgrund der mitunter langen und in der Regel eine Mehrzahl an Rohrbögen umfassenden Rohrleitungen bzw. Schlauchleitungen, insbesondere bei großen Ausbringmengen und bei abrasiven Verteilgütern, sehr verschleißbehaftet. Zudem ist deren Aufbau durch die Vielzahl an Rohrleitungen bzw. Schlauchleitungen entsprechend kostenintensiv und aufwendig, wodurch derartige Düngerstreuer in der Regel wesentlich teurer in deren Anschaffung und dessen Unterhalt als sog. Scheibenstreuer bzw. Zentrifugalstreuer sind.

Ein weiteres Problem bei derartigen Verteilmaschinen besteht darin, dass es auch mit derartigen pneumatischen Düngerstreuer bei Section-Control Anwendungen zu Verteilfehlern, wie bspw. zu Überlappungen oder Fehlstellen kommen kann, da aufgrund der mitunter langen Rohr- bzw. Schlauleitungen, die Zeitdifferenzen zwischen den Dosiervorrichtungen und den Verteilelementen bislang nicht ausreichend mit verarbeitet bzw. berücksichtigt werden konnten, wodurch es häufig vorkam, dass die Dosiervorrichtungen zu früh oder zu spät ein- und ausgeschaltet wurden.

Die EP 2 870 850 A1 beschreibt beispielsweise ein Anzeige- und/oder Steuersystem für das An- und Abschalten eines Dosierorgans einer Verteilmaschine mit einem Vorratsbehälter. In dessen unterem Bereich ist zumindest ein von einem Antriebselement betätigbares Dosiergan angeordnet, mit dem das sich im Vorratsbehälter befindliche auszubringende Material in einstellbaren Mengen in zumindest eine Leitung eingespeist wird, welche zu einem, eine Auslassöffnung aufweisenden Ausbringorgan führt. In die Datenverarbeitungseinrichtung ist die Förderzeit und/oder die zurückgelegte Wegstrecke der Verteilmaschine des auszubringenden Materials von der Dosierung des Materials durch das Dosierorgan bis zur Auslassöffnung der Leitung im Bereich des Ausbringorganes eingebbar oder dieser mitteilbar. Dadurch kann die Datenverarbeitungseinrichtung entsprechend der pro Zeiteinheit zurückgelegten Wegstrecke durch die Verteilmaschine den optimalen Ein- und Ausschaltpunkt für das Dosierorgan entsprechend eines im Speicher der Datenverarbeitungseinrichtung hinterlegten Berechnungsverfahren berechnen bzw. ausgeben.

Der Erfindung liegt die Aufgabe zugrunde, eine Verteilmaschine, insbesondere einen pneumatischen Düngersteuer, zum Ausbringen von körnigen landwirtschaftlichen Streugütern zu schaffen, mit der eine Verbesserung von Section-Control Anwendungen und somit eine verbesserte Verteilung von Streugütern erreicht wird, insbesondere liegt der Erfindung die Aufgabe zugrunde optimale Ein- und Ausschaltpunkte einer Dosiervorrichtung zu erreichen.

Diese Aufgaben werden gelöst durch ein Steuerungs- und/oder Regelungssystem für eine landwirtschaftliche Verteilmaschine zum Ausbringen von körnigem landwirtschaftlichen Streugut mit den Merkmalen des Anspruchs 1, durch eine landwirtschaftliche Verteilmaschine mit einem derartigen Steuerungs- und/oder Regelungssystem mit den Merkmalen des Anspruchs 20, sowie durch ein Verfahren zur Steuerung- und/oder Regelung einer landwirtschaftlichen Verteilmaschine mit den Merkmalen des Verfahrensanspruchs 22. Vorteilhafte Weiterbildungen der Erfindung sind in den abhängigen Ansprüchen und der Beschreibung angegeben.

Die Erfindung betrifft ein Steuerungs- und/oder Regelungssystem für eine landwirtschaftliche Verteilmaschine, insbesondere einen pneumatischen Düngerstreuer, zum Ausbringen von körnigem landwirtschaftlichem Streugut, mit einer Datenverarbeitungseinrichtung sowie einem Vorratsbehälter zum Mitführen und/oder Bereitstellen des Streuguts.

Um große Arbeitsbreiten, d.h. um eine große Schlagkraft mittels der Verteilmaschine bzw. mittels des Düngerstreuers zu erreichen, umfasst diese ein sich quer zu einer Fahrtrichtung erstreckendes Verteilgestänge, wobei am Verteilgestänge Verteilleitungen mit Verteilelementen angeordnet sind und wobei zur Förderung des Streuguts zu den Verteilelementen, die Verteilleitungen mit einem Luftvolumenstrom beaufschlagbar sind.

Um eine Verteilmaschine zum Ausbringen von körnigen landwirtschaftlichen Streugütern zu schaffen, mit der eine Verbesserung von Section-Control Anwendungen und somit eine verbesserte Verteilung von Streugütern erreicht wird, sieht die Erfindung eine Ermittlung und/oder Auswertung, der Förderzeit des zu verteilenden Streuguts von der Dosiervorrichtung entlang der Verteilleitung bis zum Verteilelement, sowie einer zurückgelegten Wegstrecke der Verteilmaschine pro Zeiteinheit, vor, wobei entsprechend eines in der Datenverarbeitungseinrichtung hinterlegten Steuerungs- und/oder Regelungsprogramms anhand der entsprechend pro Zeiteinheit zurückgelegten Wegstrecke und der Förderzeit der optimale Ein- und Ausschaltpunkt der Dosiervorrichtung berechenbar und/oder ausgebbar ist.

Mit dem erfindungsgemäßen Steuerungs- und/oder Regelungssystem kann somit gegenüber dem Stand der Technik eine wesentlich verbesserte Verteilung von körnigem landwirtschaftlichen Streugut erreicht werden, da ein Ein- und Ausschaltpunkt einer Dosiervorrichtung jeweils aufgrund der ermittelten und/oder ausgewerteten Förderzeit und der jeweils zurückgelegten Wegstrecke pro Zeiteinheit wesentlich exakter definiert und somit Fehlstellen und Überlappungen weitgehend vermieden bzw. gänzlich vermieden werden können. Dies kann gemäß einer Weiterbildung der Erfindung ohne jegliches eingreifen durch eine Bedienperson erfolgen.

Um einen vereinfachten Aufbau der Verteilmaschine zu erreichen, insbesondere um die benötigten Rohrleitungen bzw. Schlauchleitungen auf ein Minimum zu reduzieren, kann in einer Weiterbildung der Erfindung vorgesehen sein, dass mittels einer, mit dem Verteilgestänge eine bauliche Einheit bildenden Dosiervorrichtung, Streugut in die Verteilleitungen dosierbar ist. Dabei ist das Streugut wiederum mittels eines im Betrieb der Verteilmaschine in den Verteilleitungen vorhandenen Luftvolumenstroms zu den Verteilelementen förderbar, wobei hierfür zweckmäßig die Verteilleitung mit einem Luftvolumenstrom beaufschlagbar ist.

Weiterhin ist am Verteilgestänge eine Mehrzahl an Verteilleitungen mit unterschiedlichen Längen angebracht. Darüber hinaus ist es möglich, dass die Verteilleitungen unterschiedliche Querschnitte (z.B. Durchmesser, Querschnittsflächen oder dergl.) aufweisen. Des Weiteren ist es denkbar, dass in den Verteilleitungen unterschiedliche Luftvolumenströme mit insbesondere unterschiedlichen Strömungsgeschwindigkeiten vorhanden sind. In Abhängigkeit der Querschnitte, der Längen und der Luftvolumenströme kann somit jeweils die Förderzeit des Streuguts variieren.

Eine Auswertung der Förderzeit des Streuguts von der Dosiervorrichtung entlang der Verteilleitungen bis zum Verteilelement kann in einer bevorzugten Ausführungsform auf Basis von in der Datenverarbeitungseinrichtung hinterlegten Kennwerten bzgl. der Länge der Verteilleitung und/oder des Querschnitts der Verteilleitung und/oder des in der Verteilleitung vorhanden Luftvolumenstroms erfolgen, wobei auf Basis des in der Datenverarbeitungseinrichtung hinterlegten Steuerungs- und/oder Regelungsprogramms jeweils Förderzeiten ermittelbar und/oder berechenbar sein können.

Die Ermittlung der Förderzeit kann bspw. mittels einer Sensoranordnung zur Ermittlung der Förderzeit erfolgen, welche Sensoranordnung bspw. einen oder mehrere (z.B. Durchflusssensoren, Infrarotsensoren, Kamerasystem, Radarsensoren oder dergl.) umfassen kann.

Es ist möglich, dass den Verteilelementen Sensoren (z.B. Durchflusssensor, Infrarotsensor, Radarsensor, Kamerasystem, oder dergl.) zur Erfassung des Streuguts zugeordnet sind. Somit wäre es bspw. denkbar, dass mittels der Datenverarbeitungseinrichtung bzw. mittels des in der Datenverarbeitungseinrichtung, insbesondere in einem Speicher der Datenverarbeitungseinrichtung, hinterlegten Steuerungs- und/oder Regelungsprogramms eine Zeitdifferenz ermittelt wird, die zwischen dem Ein- oder Ausschaltpunkt der Dosiervorrichtung und dem Detektieren von Streugut am Verteilelement, mittels der Sensoranordnung zur Ermittlung und/oder Auswertung der Förderzeit liegt. Dabei entspricht Zeitdifferenz wiederum der Förderzeit. Neben einer Erfassung des Ein- und des Ausschaltpunkts der Dosiervorrichtung wäre es auch denkbar, dass die Sensoranordnung zur Ermittlung der Förderzeit einen der Dosiervorrichtung nachgeordneten und/oder mit der Dosiervorrichtung gekoppelten Sensor (z.B. Ultraschall-Durchflussmesser oder dergl.) zur Erfassung von Streugut umfasst.

Eine Ermittlung und/oder Auswertung der zurückgelegten Wegstrecke pro Zeiteinheit kann bspw. mittels einer Sensoranordnung zur Ermittlung und/oder Auswertung der Wegstrecke pro Zeiteinheit erfolgen, welche Sensoranordnung bspw. einen oder mehrere Sensoren (z.B. Geschwindigkeitssensor oder dergl.) umfassen kann.

Es ist möglich, dass die Sensoranordnung zur Ermittlung und/oder Auswertung der zurückgelegten Wegstrecke pro Zeiteinheit bspw. Sensoren (z.B. Geschwindigkeitssensoren) oder dergl. an der Verteilmaschine, insbesondere an einem Fahrwerk der Verteilmaschine umfasst, mittels derer jeweils die Fahrgeschwindigkeit der Verteilmaschine erfassbar ist. Somit wäre es bspw. denkbar, dass mittels der Datenverarbeitungseinrichtung bzw. mittels des in der Datenverarbeitungseinrichtung, insbesondere in einem Speicher der Datenverarbeitungseinrichtung, hinterlegten Steuerungs- und/oder Regelungsprogramms auf Basis der erfassten Fahrgeschwindigkeit die von der Verteilmaschine zurückgelegte Wegstrecke pro Zeiteinheit berechnet wird.

Gemäß einem weiteren Aspekt der Erfindung wäre es möglich, dass die Sensoranordnung zur Ermittlung und/oder Auswertung der zurückgelegten Wegstrecke pro Zeiteinheit, einen oder mehrere Sensoren (z.B. Beschleunigungssensoren, Drehratensensoren, Radarsensoren, Kamerasysteme, oder dergl.) umfasst, welche Sensoren insbesondere am Verteilgestänge angebracht sind. Insbesondere können am linken und/oder am rechten Außenbereich des Verteilgestänges derartige Sensoren angebracht sein. Wobei ergänzend oder alternativ einem Mittelteil des Verteilgestänges derartige Sensoren zugeordnet sein können. Anhand der mittels der Sensoren erfassten Geschwindigkeit (z.B. Beschleunigung, Verzögerung, konstante Geschwindigkeit) kann wiederum die zurückgelegte Wegstrecke pro Zeiteinheit ermittelt werden.

Gemäß einer weiteren Ausführungsvariante der Erfindung kann es zudem möglich sein, dass mittels der Sensoranordnung zur Ermittlung und/oder Auswertung der Zurückgelegten Wegstrecke pro Zeiteinheit eine Auswertung erfolgt, ob die Verteilmaschine eine Kurve durchfährt. Wobei wiederum mittels des in der Datenverarbeitungseinrichtung hinterlegten Steuerungs- und/oder Regelungsprogramms für die Dosiervorrichtungen der Verteilleitungen im Kurveninneren andere Ein- und Ausschaltpunkte berechenbar und/oder ausgebbar sind als für die Dosiervorrichtungen der Verteilleitungen im Kurvenäußeren. Gemäß einer Weiterbildung kann hierbei zusätzlich vorgesehen sein, dass die mittels der Dosiervorrichtung dosierte Menge an Streugut erhöht oder verringert wird, d.h. es kann vorgesehen sein, dass in die Verteilleitungen im Kurveninneren mittels der Dosiervorrichtung weniger Streugut zugeführt wird und dass in die Verteilleitungen im Kurvenäußeren mittels der Dosiervorrichtung mehr Streugut zugeführt wird.

Um die Ein- und Ausschaltpunkte noch exakter definieren zu können, kann in einer alternativen Ausführungsvariante der Verteilmaschine vorgesehen sein, dass mittels des in der Datenverarbeitungseinrichtung hinterlegten Steuerungs- und/oder Regelungsprogramms jeweils eine Auswertung der mittels der Sensoranordnung zur Ermittlung und/oder Auswertung der Zurückgelegten Wegstrecke pro Zeiteinheit erfolgt, ob die Verteilmaschine mit konstanter Geschwindigkeit und/oder mit einer Beschleunigung oder mit einer Verzögerung bewegt wird und wobei auch wiederum auf Basis dieser ein voreilender oder nacheilender Ein- oder Ausschaltpunkt berechenbar und/oder ausgebbar sein kann. D.h. wird bspw. die Verteilmaschine beschleunigt kann ein Voreilender Einschaltpunkt berechenbar und/oder ausgebbar sein, d.h. dass die Dosiervorrichtung derartig aktiviert wird, dass in Abhängigkeit einer Förderzeit eine Verteilung von Streugut tendenziell eher beginnt, als die Verteilmaschine für eine Wegstrecke pro Zeiteinheit an Zeit benötigt.

Zur Definition der Positionen an welchen eine Verteilung von Streugut mittels des Düngerstreuers erfolgen soll, kann dieses mit einem Positionsbestimmungssystem (z. B. GPS, Glonass, oder dergl.) verbindbar sein, insbesondere kann die Datenverarbeitungseinrichtung mit einem derartigen Positionsbestimmungssystem verbindbar sein. Zweckmäßig können mittels der Datenverarbeitungseinrichtung und dem Positionsbestimmungssystem Sollpositionen für die Verteilung von Streugut generiert werden. Dabei kann erfindungsgemäß vorgesehen sein, dass entsprechend eines in der Datenverarbeitungseinrichtung hinterlegten Steuerungs- und/oder Regelungsprogramms anhand der Förderzeit, der pro Zeiteinheit zurückgelegten Wegstrecke sowie der Sollposition für die Verteilung von Streugut der optimale Ein- und Ausschaltpunkt der Dosiervorrichtung berechenbar und/oder ausgebbar ist.

Um möglichst schnelle Ein- und Ausschaltpunkt der Dosiervorrichtung zu erreichen, bzw. um zu erreichen, dass die Verteilung von Streugut möglichst exakt an den Sollpositionen erfolgt, kann in einer Weiterbildung der Erfindung vorgesehen sein, dass insbesondere die Dosiervorrichtung und/oder die Komponenten der Verteilung des Streuguts frühzeitig in einen Stand-By-Zustand überführt werden, wobei dieser Stand-By-Zustand einem arbeitsbereiten Zustand der Komponenten entsprechen kann ohne jedoch schon eine Dosierung- und/oder Verteilung von Streugut durchzuführen. Der arbeitsbereite Zustand kann beispielsweise das Überführen der Komponente in eine Arbeitsstellung umfassen, aber auch das Einschalten der Komponente bzw. die Initiierung der Stromversorgung der Komponente oder das Einstellen wenigstens eines Betriebsparameters auf den Arbeitswert. Somit können insbesondere Todzeiten überbrückt bzw. auf ein Minimum reduziert werden.

Bei der Verteilmaschine handelt es sich vorzugsweise um einen Düngerstreuer, zweckmäßig um einen pneumatischen Düngerstreuer bzw. Pneumatikstreuer, mittels welches Düngerstreuers körnige bzw. granulare landwirtschaftlich Streugüter ausbringbar sind. Bei den Streugütern kann es sich bspw. um landwirtschaftliche Dünger und/oder Mikrogranulate und/oder dergl. handeln. Auch Saatgüter, welche ganzflächig ausgebracht werden können, d.h. welche keine Ablage mittels eines Säschares erfordern sind mittels der erfindungsgemäßen Verteilmaschine ausbringbar.

Die Verteilmaschine kann als eine Selbstfahrende oder als eine mittels Zugfahrzeug koppelbare bzw. gezogene oder als an einem Zugfahrzeug anbaubare bzw. angebaute landwirtschaftliche Verteilmaschine ausgebildet sein. Die Selbstfahrende Verteilmaschine könnte zudem ein autonomes Fahrzeug (z.B. vollautonom oder teilautonom) sein, wobei das autonome Fahrzeug insbesondere für den landwirtschaftlichen Gebrauch geeignet sein kann. Zudem könnte die Verteilmaschine an ein Selbstfahrendes und/oder autonomes Trägerfahrzeug montierbar bzw. montiert sein.

Zum Tragen der jeweiligen Baugruppen umfasst die Verteilmaschine zudem eine Rahmenkonstruktion, sowie zum Mitführen und/oder Bereitstellen des Streuguts zumindest einen Vorratsbehälter. Dabei kann die Verteilmaschine in Abhängigkeit der Anzahl an verschiedenen Streugütern auch einen mehrere Kammern aufweisenden Vorratsbehälter umfassen und dabei können die Kammern zudem gleiche oder unterschiedliche Volumen aufweisen. So kann der Vorratsbehälter bspw. zwei Kammern aufweisen, welche Kammern unterschiedliche oder gleiche Volumen aufweisen können. Somit wird eine Verteilung von unterschiedlichen Streugütern ermöglicht. Insofern die Kammern unterschiedliche Volumen aufweisen, kann in der Kammer mit dem größeren Volumen das Streugut mitgeführt werden, von welchem größere Mengen benötigt werden. Die Kammern können durch ein oder mehrere Zwischenblech(e) in einer gemeinsamen Schweißbaugruppe und/oder Montagebaugruppe (z.B. mittels Schrauben montierte Baugruppe) erzeugt werden. Auch könnten die Kammern jeweils als separate Kunststofftanks und/oder Schweißbaugruppen und/oder Montagebaugruppenausgeführt sein, welche wiederum als eine Einheit den Vorratsbehälter bilden. Auch eine Kombination von Kunststofftanks und/oder Schweißbaugruppen und/oder Montagebaugruppen wäre denkbar.

Gemäß einem weiteren Aspekt können die zwei oder mehreren Kammern ein gemeinsames Deckelelement aufweisen. Darüber hinaus wäre es auch denkbar, dass jede Kammer ein separates Deckelelement aufweist.

Um hohe Ausbringmengen an Streugut zu realisieren, kann in einer Weiterbildung der Erfindung der Vorratsbehälter (bzw. die eine oder mehreren Kammern und/oder zumindest eine der mehreren Kammern) druckdicht ausgebildet sein. Zudem kann der Vorratsbehälter (bzw. die eine oder mehreren Kammern und/oder zumindest eine der mehreren Kammern) mit einem Überdruck beaufschlagbar sein.

Gemäß einer Weiterbildung der Erfindung kann zudem vorgesehen sein, dass in einem Fördersystem das gleiche oder ein geringeres Druckniveau als im Vorratsbehälter (bzw. in der einen oder den mehreren Kammern und/oder zumindest in einer der mehreren Kammern) anliegen kann, um somit einen kontinuierlichen Fluss des Streuguts aus dem Vorratsbehälter zum Fördersystem zu gewährleisten.

In einer bevorzugten Ausführungsform der Erfindung ist die Verteilmaschine als pneumatisch arbeitender Düngerstreuer ausgebildet, was bedeutet, dass das Streugut von der Dosiervorrichtung zu den Verteilelementen entlang der Verteilleitungen mittels eines Luftvolumenstroms befördert werden kann bzw. im Betrieb befördert wird. Zur Erzeugung eines Luftvolumenstroms in den Verteilleitungen bzw. zur Beaufschlagung der Verteilleitungen mit einem Luftvolumenstrom sind diese mit einer Strömungserzeugungseinrichtung verbunden. Bei der Strömungserzeugungseinrichtung handelt es sich vorzugsweise um ein oder mehrere Gebläse (z.B. Zentrifugalgebläse, Radialgebläse, Axialgebläse, Diagonalgebläse, Querstromgebläse oder dergl.).

Die Strömungserzeugungseinrichtung ist in einer Weiterbildung der Erfindung derartig ausgeführt und/oder betreibbar, dass mittels dieser insbesondere unterschiedliche Strömungsgeschwindigkeiten des Luftvolumenstroms erzeugbar sind. Wobei dies bspw. durch unterschiedliche Antriebsdrehzahlen der Strömungserzeugungseinrichtung erreicht werden kann, wobei hierfür die Strömungserzeugungseinrichtung zudem mittels eines motorischen Antriebs (z.B. Hydraulikmotor, Elektromotor, oder dergl. Antrieb) mit verschiedenen Drehzahlen betreibbar sein kann.

Es ist möglich, dass die Strömungserzeugungseinrichtung der Rahmenkonstruktion räumlich zugeordnet ist und mittels Verbindungsleitungen mit den Verteilleitungen und/oder der Dosiervorrichtung verbunden ist.

Um keine Verbindungsleitungen zu benötigen bzw. um möglichst kurze Verbindungsleitungen verwenden zu können, ist es gemäß einer weiteren Ausführungsvariante möglich, dass die Strömungserzeugungseinrichtung dem Verteilgestänge zugeordnet ist. Dabei können die Strömungserzeugungseinrichtung und das Verteilgestänge eine bauliche Einheit bilden.

Der Strömungserzeugungseinrichtung kann ein Luftstromteiler zugeordnet sein, mittels welchem der mittels der Strömungserzeugungseinrichtung erzeuge Luftvolumenstrom in eine Mehrzahl von Luftvolumenströmen aufgeteilt werden kann. Wobei die Mehrzahl zweckmäßig der Anzahl an Verteilleitungen entspricht.

Der Luftstromteiler kann unterschiedliche Querschnitte zur Verbindung mit den Verteilleitungen aufweisen, um somit die Luftvolumenströme in den Verteilleitungen zu variieren, wobei dies bspw. in Abhängigkeit der Länge der angeschlossenen Verteilleitungen erfolgen kann.

In einer weiteren Ausführungsvariante ist es zudem denkbar, dass im Luftstromteiler, Luftvolumenströme und/oder Strömungsgeschwindigkeiten beeinflussende Elemente angebracht sind, bspw. Klappen zur Veränderung des Durchlassquerschnitts und/oder Schaltelemente zur Veränderung des Durchlassquerschnitts, um somit wiederum die in den Verteilleitungen vorhandenen Luftvolumenströme zu variieren. Eine Variation kann bspw. in Abhängigkeit der Länge oder des Querschnitts der angeschlossenen Verteilleitungen erfolgen. Die Klappen und/oder Schaltelemente können zudem manuell verstellbar sein und/oder mittels Stellelementen motorisiert bzw. automatisiert verstellbar sein.

Der Luftstromteiler kann wiederum mit dem Verteilgestänge eine bauliche Einheit bilden, d.h. insbesondere dem Verteilgestänge räumlich zugeordnet sein.

Es sei darauf hingewiesen, dass im vorliegenden unter dem Begriff "Luftvolumenstrom" insbesondere jegliche Art von Gasförmigen Medien verstanden wird, mittels welchen körnige Streugüter förderbar sind. Darüber hinaus kann der Luftvolumenstrom auch durch eine Überdruckbeaufschlagung bspw. der Verteilleitungen erzeugt werden, wobei durch ein in den Verteilleitungen wiederum vorhandenes Druckgefälle (bspw. erzeugt durch eine Öffnung an den Verteilelementen) wiederum eine Luftstrom bzw. ein Luftvolumenstrom entsteht.

Zur Erreichung einer möglichst großen Schlagkraft weist die Verteilmaschine ein sich quer zur Fahrtrichtung erstreckendes Verteilgestänge auf. Dabei weist das Verteilgestänge einen mit der Rahmenkonstruktion verbundenen Träger, ein Mittelteil und schwenkbar am Mittelteil angebrachte Seitenausleger auf.

Zur Einhaltung einer zulässigen Transportbreite sind die Seitenausleger insbesondere um aufrechte Achsen schwenkbar am Mittelteil angebracht. In einer weiteren Ausführungsvariante wären auch horizontale Achsen denkbar. Zudem könnten in einer Weiterbildung der Erfindung die Seitenausleger aus um aufrechte und/oder horizontale Achsen schwenkbar zueinander gelagerten Segmenten zusammengesetzt sein.

Das Verteilgestänge bzw. das Mittelteil und/oder die Seitenausleger können zudem zumindest abschnittsweise durch ein Fachwerk gebildet sein, insbesondere können das Mittelteil und/oder die Seitenausleger durch eine Fachwerkkonstruktion gebildet sein, d.h. insbesondere eine Gitterstruktur aufweisen. In einer bevorzugten Ausführungsvariante weist das Fachwerk bzw. die Fachwerkkonstruktion zudem eine größere Höhe als Tiefe auf. Gemäß einer weiteren Ausführungsvariante kann das Fachwerk hierbei eine dreieckförmige Gitterstruktur aufweisen.

Das Verteilgestänge kann zudem eine große Arbeitsbreite bzw. in einer Arbeitsstellung eine große Erstreckung quer zur Fahrtrichtung, von bis zu 20 Meter oder 30 Meter oder mehr aufweisen.

Gemäß einem weiteren Aspekt der Erfindung kann das Verteilgestänge, insbesondere dessen Mittelteil, mittels einer Lagerung quer zur Fahrtrichtung drehbar zum bzw. am Träger angebracht sein. Dabei kann zudem eine Steuer- und/oder Regelbarkeit der Drehlage des Verteilgestänges vorgesehen, um somit eine Anpassung des Verteilgestänges an Bodenunebenheiten zu ermöglichen. Zur Steuerung und/oder Regelung der Drehlage kann insbesondere eine Stelleinrichtung vorgesehen sein.

Die Stelleinrichtung kann durch z.B. durch einen oder mehrere hydraulisch und/oder pneumatisch und/oder elektrisch betriebene Linearantriebe oder Drehantriebe oder dergl. Antriebe gebildet werden. Insbesondere kann die Stelleinrichtung durch einen oder zwei hydraulisch oder pneumatisch betriebene Zylinder gebildet sein.

Die Stelleinrichtung kann zweckmäßig doppeltwirkend sein, so dass die Drehlage im oder entgegengesetzt zum Uhrzeigersinn um die Lagerung verschwenkt werden kann. Die Stelleinrichtung kann bspw. durch zumindest einen doppeltwirkenden pneumatischen und/oder hydraulisch betriebenen Zylinder gebildet sein oder durch zumindest zwei einfachwirkende pneumatisch und/oder hydraulisch betriebene Zylinder gebildet sein, welche einfachwirkenden Zylinder gegensinnig arbeiten.

In einer weiteren Ausführungsvariante kann vorgesehen sein, dass die Rahmenkonstruktion den Träger mit der Lagerung umfasst an welchem Träger bzw. an welcher Lagerung das Verteilgestänge drehbar gelagert ist. Die Rahmenkonstruktion kann zudem insbesondere mehrteilig ausgeführt sein, wobei die Einzelteile wiederum mittels einer unlösbaren (z.B. Schweißen) und/oder lösbaren (z.B. Schrauben oder dergl. Maschinenelemente) Verbindung verbunden sein können. Die Rahmenkonstruktion kann zudem derartig ausgeführt sein, dass bspw. ein Parallelogramm und/oder eine Lineareinheit an welcher wiederum der Träger angebracht sein kann, angebaut werden kann. Zudem wäre es denkbar, dass wiederum der Vorratsbehälter und/oder das Fördersystem Bestandteil der Rahmenkonstruktion sind.

Erfindungsgemäß kann die Lagerung eine parallel zu einer Fahrtrichtung orientierte Achse und/oder Drehachse sein. Auch könnte die Lagerung ein zumindest abschnittsweise kugelförmiges Element sein, um welches zumindest abschnittsweise kugelförmige Element sich das Verteilgestänge, bzw. insbesondere das Mittelteil in Bezug zum Träger, bzw. das Verteilgestänge sich in Bezug auf eine Fahrtrichtung der Verteilmaschine drehen kann, wobei auch wiederum das zumindest abschnittsweise kugelförmige Element eine entsprechende Achse ausbilden kann. Insbesondere ist die Lagerung derartig ausgeführt, dass sich das Verteilgestänge quer zur Fahrtrichtung drehen kann.

Um die Verteilqualität zu verbessern, bzw. um insbesondere auch starken Winden die Abdrift auf ein Minimum reduzieren zu können, ist in einer Weiterbildung der Erfindung eine Steuer- und/oder Regelbarkeit der Höhenlage des Verteilgestänges vorgesehen, d.h. dass insbesondere vorgesehen sein kann, dass das Verteilgestänge höhenverstellbar zu einer Bodenoberfläche oder zu einem Pflanzenbestand ist Dies wird insbesondere durch eine Höhenverstellung des Verteilgestänges in Bezug auf die Rahmenkonstruktion erreicht. Die Höhenverstellung kann bspw. mittels eines zwischen der Rahmenkonstruktion und dem Träger angeordneten Parallelogramms oder einer Lineareinheit umgesetzt sein. Dabei kann dem Parallelogramm oder der Lineareinheit zumindest ein Stellglied (z.B. ein oder mehrere hydraulisch und/oder pneumatisch betriebene Linearantriebe wie bspw. Zylinder oder dergl.) entsprechend zur Variation des Höhenabstandes, d.h. zum Verschwenken des Parallelogramms oder zur Verstellung der Lineareinheit zugeordnet sein.

Das Parallelogramm und/oder die Lineareinheit können zweckmäßig Bestandteil des Verteilgestänges sein, bzw. es kann insbesondere der Träger des Verteilgestänges mit dem Parallellogramm und/oder der Lineareinheit verbunden sein.

Durch einen weitgehenden Verzicht an Rohrleitungen zwischen dem Vorratsbehälter und dem Verteilgestänge ist somit eine Steuer- und/oder Regelbarkeit einer Drehlage und/oder Höhenlage des Verteilgestänges möglich. Durch eine derartige Steuern- und/oder Regelbarkeit kann somit gegenüber den aus dem Stand der Technik bekannt gewordenen Verteilmaschinen eine wesentlich verbesserte Verteilqualität bei einer Minimierung der Abdrift auch bei unebenen Bodenkonturen erreicht werden, da somit erreichbar ist, dass das Verteilgestänge jeweils gleichbleibende Höhenlagen und Drehlagen zu einer Bodenoberfläche oder einem Pflanzenbestand aufweist.

Zur Steuer- und/oder Regelbarkeit der Drehlage und/oder der Höhenlage kann in einer Weiterbildung die erfindungsgemäße Verteilmaschine ein Steuerungs- und/oder Regelungssystem umfassen. Wobei mittels des Steuerungs- und/oder Regelungssystems jeweils das bzw. die Stellglieder zur Steuerung- und/oder Regelung der Höhenlage des Verteilgestänges zur Rahmenkonstruktion bzw. zu einer Bodenoberfläche oder einem Pflanzenbestand und/oder eine Stelleinrichtung zur Steuerung- und/oder Regelung der Drehlage ansteuerbar und/oder regelbar sind.

Um eine noch weiter verbesserte Anpassung des Verteilgestänges zu erreichen, kann in einer Weiterbildung der Erfindung zudem vorgesehen sein, dass die Seitenausleger zum Mittelteil und/oder die Segmente der Seitenausleger jeweils zueinander anwinkelbar sind, zweckmäßig in Bezug auf eine Bodenoberfläche oder einen Pflanzenbestand. Wobei dies insbesondere erreicht wird, in dem die Seitenausleger zum Mittelteil und/oder die Segmente der Seitenausleger um horizontale Schwenkachsen schwenkbar zueinander sind, d.h. das diese in Richtung zu oder weg von einer Bodenoberfläche oder einem Pflanzenbestand schwenkbar sind. Wobei wiederum dieses Verschwenken mittels ein oder mehrerer hydraulisch oder pneumatisch oder elektrisch betriebener Linearantriebe oder Drehantriebe oder dergl. erfolgen kann und wobei auch wiederum diese Linearantriebe oder Drehantriebe mittels eines bzw. mittels des Steuerungs- und/oder Regelungssystems ansteuerbar und/oder regelbar sind.

Entlang dem Verteilgestänge ist eine Mehrzahl an Verteilleitungen angebracht, an welchen Verteilleitungen ein oder mehrere Verteilelemente angebracht sind. Insbesondere weisen die Verteilleitungen unterschiedliche Längen auf bzw. erstrecken sich diese jeweils von der Dosiervorrichtung entlang des Mittelteils zu den Seitenauslegern in unterschiedlichen Längen. Zudem weisen die Verteilleitungen in deren Verlauf und/oder an dessen äußerem Ende ein Verteilelement auf, insbesondere jedoch an dessen äußerem Ende.

Gemäß einem weiteren Aspekt der Erfindung können die Verteilleitungen und/oder die Verteilelemente in Bezug auf das Mittelteil zumindest weitgehend symmetrisch zueinander am Verteilgestänge angebracht sein. Zudem kann vorgesehen sein, dass die Verteilelemente eine gleiche Höhenposition am Verteilgestänge aufweisen.

Die Verteilleitungen können zudem zwischen dem Mittelteil und den Seitenauslegern bzw. zwischen den Segmenten der Seitenauslegern Trennstellen aufweisen. Dabei können die Trennstellen derartig ausgeführt sein, dass die Seitenausleger zum Mittelteil bzw. die Segmente der Seitenausleger zueinander bewegbar sind und dennoch eine Förderung von Streugut entlang der Verteilleitungen möglich ist. Die Trennstellen können bspw. durch flexible Schlauchleitungen oder durch in dessen Länge variable Elemente (z.B. Faltenbalg oder dergl.) gebildet sein.

Ein kostengünstiges Verteilelement wird insbesondere erreicht, indem dieses durch einen Prallteller gebildet ist, gegen welchen Prallteller das Streugut mittels des Luftvolumenstroms gefördert wird und mittels welches Pralltellers anschließend das Streugut fächerförmig verteilt werden kann, insbesondere in Richtung einer Bodenoberfläche oder einem Pflanzenbestand verteilt wird.

Es ist möglich, dass die Größe des mittels des Verteilelements erzeugten Streufächers variabel veränderbar bzw. steuer- und/oder regelbar ist, wobei dies bspw. durch eine Anpassung des Luftvolumenstroms erfolgen kann und/oder durch eine Veränderung der Winkelstellung des Pralltellers.

In einer weiteren Ausführungsvariante wäre es zudem denkbar, dass das Verteilelement durch einen bogenförmigen Endbereich der Verteilleitung gebildet wird, wobei wiederum der bogenförmige Endbereich drehbar und/oder schwenkbar an der Verteilleitung angebracht sein kann, wobei auch wiederum mittels derartiger Verteilelemente Streufächer erzeugt werden können.

Die Verteilelemente können insbesondere derartig ausgeführt sein, dass mittels diesen eine ganzflächige Verteilung des Streuguts über einer Bodenoberfläche oder einem Pflanzenbestand durchführbar ist.

In einer bevorzugten Ausführungsvariante der Verteilmaschine kann vorgesehen sein, dass die Verteilelemente derartig am Verteilgestänge angeordnet sind oder dass die mittels der Verteilelemente erzeugten Streufächer derartig sind, dass die Streufächer jeweils angrenzend zueinander sind, d.h. das jeweils keine Überlappung der Streufächer entsteht.

Gemäß einer alternativen Ausführungsvariante wäre es zudem denkbar, dass die Verteilelemente derartig am Verteilgestänge angeordnet sind oder dass die mittels der Verteilelemente erzeugten Streufächer derartig sind, dass sich die Streufächer überlappen. So kann bspw. eine doppelte- oder dreifache Überlappung der Streufächer vorgesehen sein, wodurch wiederum die Verteilqualität erhöht werden kann.

Gemäß einer weiteren Ausführungsvariante können jeweils die Höhenlage und/oder die mittels der Verteilelementen erzeugten Streufächer derartig Steuer- und/oder Regelbar sein, dass in Abhängigkeit des Streuguts keine Überlappung oder eine doppelte- oder dreifache Überlappung der Streufächer erzeugt werden kann.

Die mittels der Verteilelemente erzeugten Streufächer können eine sich nach unten, d.h. von einem Verteilgestänge weg, aufweitende Dreieckförmige und/oder Kegelförmige Form aufweisen. Auch können die Streufächer eine rechteckförmige Form aufweisen. Auch eine lineare Form der Streufächer wäre denkbar.

Um die benötigte Menge Streugut möglichst effektiv einzusetzen, kann darüber hinaus vorgesehen sein, dass die mittels der Verteilelemente erzeugten Streufächer in Bereichen in denen keine Nutzpflanzen sich befinden so ausgebildet sind, dass in diesen Bereichen kein Streugut ausgebracht wird, wobei die Bereiche bspw. sog. Fahrgassen sein können. Insbesondere können die Verteilelemente in diesen Bereichen mit entsprechenden Blenden, Umlenkblechen oder dergl. versehen werden. Insbesondere können an derartigen Bereichen asymmetrische Streufächer erzeugt werden. Zudem kann in diesen Bereichen bzw. bei in diesen Bereichen befindenden Verteilelementen, die mittels der Dosiervorrichtung dosierte Menge an Streugut reduziert werden.

Die Dosiervorrichtung kann eine oder mehrere Dosiereinheiten umfassen. Zweckmäßig kann für eine möglichst variable Ausbringung an Streugut vorgesehen sein, dass jeder Verteilleitung mittels einer dieser zugeordneten Dosiereinheit Streugut zugeführt wird, wobei dies insbesondere in variablen Mengen erfolgen kann.

Insofern die Zuführung von Streugut zu den Dosiereinheiten mittels einer Verteileinheit erfolgt, kann vorgesehen sein, dass die Anzahl an Abgängen entsprechend der Anzahl an Dosiereinheiten ist. Zudem kann vorgesehen sein, dass in den Abgängen den Streugutdurchfluss beeinflussende Elemente angebracht sind, bspw. Klappen zum Verschließen oder zur Freigabe oder zur Erhöhung oder Verringerung des Streugutdurchflusses. Die Klappen können zudem manuell verstellbar sein und/ oder mittels Stellelementen motorisch verstellbar sein.

Es ist möglich dass die Dosiervorrichtung in die Verteileinheit insbesondere in die Abgänge der Verteileinheit integriert ist. So kann jedem Abgang bspw. eine Dosiereinheit zugeordnet sein, welcher Dosiereinheit wiederum eine Verteilleitung nachgeordnet sein kann.

Zur Reduktion der benötigten Dosiereinheiten ist es zudem möglich sein, dass zwei oder mehr Verteilleitungen mittels einer Dosiereinheit Streugut zuführbar ist.

Die ein oder mehreren Dosiereinheiten können jeweils unabhängig voneinander betreibbar sein, wobei zudem vorgesehen sein kann, dass die Ausbringmengen der Dosiereinheiten jeweils unabhängig voneinander variierbar sind. Zudem ist es möglich, dass die Dosiereinheiten unabhängig voneinander aktivierbar oder deaktivierbar sind.

In einer bevorzugten Ausführungsform ist die Dosiervorrichtung bzw. die Dosiereinheit jeweils derartig ausgebildet, dass mittels dieser eine definierte oder definierbare Menge an Streugut in die Verteilleitung oder die Verteilleitungen dosiert wird. Wobei das somit in die Verteilleitungen dosierte Streugut mit dem in diesen, mittels der Strömungserzeugungseinrichtung erzeugten Luftvolumenstrom in Richtung der Verteilelemente förderbar ist bzw. gefördert wird.

Die Dosiereinheit kann eine Zellenradschleuse sein. Dabei kann die Zellenradschleuse zur Veränderung der dosierten Menge an Streugut jeweils mit unterschiedlichen Rotoren bestückt werden und/oder dabei können die Rotoren mit unterschiedlichen Drehzahlen betrieben werden. Dabei kann der Antrieb des bzw. der Rotoren insbesondere mittels eines motorischen Antriebs (z.B. Hydraulikmotor, Elektromotor, oder dergl. Antrieb) erfolgen.

Alternativ kann die Dosiervorrichtung bzw. die Dosiereinheit durch eine Dosierschnecke gebildet sein. Die Dosierschnecke kann insbesondere einen Schneckengang aufweisen, welcher entgegengesetzt gewendelt ausgebildet ist.

Die Dosierschnecke kann derart ausgebildet sein, um mittels der Dosierschnecke eine definierte oder definierbare Menge an Streugut aus dem Vorratsbehälter zu entnehmen. Aufgrund des entgegengesetzt gewendelt ausgebildeten Schneckengangs kann das aus dem Vorratsbehälter entnommene Streugut entlang der Längserstreckung der Dosierschnecke in unterschiedliche, insbesondere entgegengesetzte, Richtungen gefördert werden, so dass jeweils unterschiedliche Verteilleitungen mit Streugut versorgt werden können.

Der Dosierschnecke kann ein Antrieb zugeordnet sein, welcher die Dosierschnecke mit unterschiedlichen Drehzahlen rotierend antreiben kann. Der Antrieb der Dosierschnecke kann durch einen motorischen Antrieb, wahlweise durch einen Hydraulikmotor, Elektromotor oder dergl. Antrieb, gebildet sein.

Gemäß einer Weiterbildung kann vorgesehen sein, dass in einem Gehäuse zwei oder vier oder mehr Dosiereinheiten angeordnet sind, d.h. das in einem Gehäuse zwei oder vier oder mehr Rotoren angebracht sind welche Rotoren jeweils einen separaten motorischen Antrieb aufweisen können. Die Rotoren können hierbei jeweils gleich sein. Auch kann zumindest ein Rotor anders ausgeführt sein, d.h. insbesondere andere Öffnungen aufweisen. Zudem können die Rotoren mit gleichen Drehzahlen betreibbar sein oder aber auch mit unterschiedlichen Drehzahlen betreibbar sein.

Gemäß einer weiteren Ausführungsvariante wäre es denkbar, dass zumindest zwei Rotoren mit einem motorischen Antrieb betreibbar sind, wobei zur Aktivierung und/oder Deaktivierung einzelner Rotoren hierbei wiederum ein Schaltelement, Getriebeelement oder dergl. vorgesehen sein kann. Zweckmäßig kann hierbei vorgesehen sein, dass zumindest zwei Rotoren mit einem motorischen Antrieb betreibbar sind zur Erzeugung einer gewünschten bzw. eine unterschiedliche Drehzahl jedoch eine Getriebeeinheit vorgesehen ist.

Die Dosiervorrichtung bzw. die die Dosiervorrichtung bildenden Dosiereinheiten können in einer bevorzugten Ausführungsvariante dem Mittelteil des Verteilgestänges zugeordnet sein. Insbesondere können die die Dosiervorrichtung bildenden Dosiereinheiten derartig am Verteilgestänge angebracht sein, dass diese den Höhenbewegungen und/oder Drehbewegungen des Verteilgestänges zumindest weitgehend synchron folgen können.

Eine vereinfachte Verbindung der Dosiervorrichtung bzw. der Dosiereinheit und/oder der Strömungserzeugungseinrichtung mit den Verteilleitungen kann erreicht werden, indem der Dosiereinheit eine Fallschleuse nachgeordnet ist, insbesondere indem eine Fallschleuse unterhalb und/oder zumindest abschnittsweise neben der Dosiereinheit angebracht ist.

Es ist zudem möglich, dass die Fallschleuse zumindest einen Anschluss für eine Strömungserzeugungseinrichtung aufweist. Zudem ist es möglich, dass die Fallschleuse einen oder mehrere Anschlüsse für eine oder mehrere Verteilleitungen aufweist.

Gemäß einer Weiterbildung der Fallschleuse ist es zudem möglich, dass in dieser, Streugutdurchfluss beeinflussende Elemente angebracht sind, bspw. Klappen zum Verschließen oder zur Freigabe der Streugutdosierung mittels der Dosiereinheit in die Fallschleuse bzw. in die Verteilleitungen. Die Klappen können zudem manuell verstellbar sein und/oder mittels Stellelementen automatisiert bzw. motorisch verstellbar sein. Durch eine derartige Ausführung ist es somit möglich, mit nur einer Dosiervorrichtung bzw. Dosiereinheit zwei oder mehr Teilbreiten zu aktivieren oder deaktivieren, insbesondere ist es durch eine derartige Ausführungsform möglich, Teilbreiten zu schalten ohne hierfür für jede Teilbreite eine separate Dosiereinheit zu benötigen, wodurch wiederum ein wesentlich vereinfachter Aufbau der Verteilmaschine erreicht wird und wodurch die Anzahl an Teilbreiten kostengünstig erhöht werden kann.

In einer vorteilhaften Ausführungsvariante kann vorgesehen sein, dass jede Teilbreite bspw. 1,5 Meter aufweist. Wobei dies bspw. bei einer Verteilmaschine mit einem Verteilgestänge mit einer Arbeitsbreite von 36 Meter dadurch erreicht werden kann, in dem 12 Dosiereinheiten vorgesehen sind, welchen 12 Dosiereinheiten jeweils eine Fallschleuse nachgeordnet ist, an welche Fallschleuse wiederum zwei Verteilleitungen (somit in Summe 24 Verteilleitungen) angebracht sind. Die Fallschleuse kann zudem jeweils eine Klappe aufweisen, mittels derer zumindest eine Dosierung von Streugut in eine Verteilleitung geschlossen werden kann.

Es kann vorgesehen sein, dass jede Verteilleitung eine Teilbreite ausbildet. Wobei hierbei wiederum jeder Verteilleitung ein Verteilelement zugeordnet sein kann.

Zur Schaffung einer möglichst flexibel einsetzbaren Verteilmaschine kann vorgesehen sein, dass mittels dieser zwei oder mehr verschieden Sorten an Streugut ausbringbar sind. Hierfür kann vorgesehen sein, dass mittels des Fördersystems eine Mischung des Streuguts erfolgt. Dies kann bspw. dadurch erreicht werden, indem Streugut aus zwei Kammern des Vorratsbehälters mittels des Fördersystems zur Dosiervorrichtung gefördert wird. Ebenso könnte vorgesehen sein, dass je Streugutsorte ein Fördersystem vorgesehen ist und jeweils mittels einer Dosiervorrichtung bzw. mittels der Dosiereinheiten das jeweilige Streugut bzw. die zwei oder mehr Streugüter in variablen Mengen in die Verteilleitung dosierbar sind. Zudem könnte vorgesehen sein, dass je Streugut ein Fördersystem und eine Dosiervorrichtung vorgesehen sind.

In einer Weiterbildung der Erfindung kann dem Behälter am Verteilgestänge oder der Verteileinheit eine Sensoranordnung zur Erfassung von dessen Füllstand zugeordnet sein. Zudem kann vorgesehen sein, dass das Fördersystem jeweils in Abhängigkeit des Füllstands aktiviert oder deaktiviert wird oder das dessen Fördermenge erhöht oder verringert wird.

Es ist zudem möglich, dass der Dosiervorrichtung eine Sensoranordnung zu Ermittlung und/oder Auswertung der dosierten Menge an Streugut zugeordnet ist und/oder dass eine Datenverarbeitungseinrichtung vorgesehen ist, mittels welcher wiederum die mittels der Dosiervorrichtung dosierte Menge an Streugut auswertbar ist. Wobei zudem vorgesehen sein kann, dass das Fördersystem jeweils in Abhängigkeit der mittels der Dosiervorrichtung dosierten Menge an Streugut aktiviert oder deaktiviert oder dessen Fördermenge erhöht oder verringert wird. Eine Auswertung der mittels der Dosiervorrichtung bzw. der mittels der Dosiereinheiten dosierten Menge an Streugut kann bspw. auf Basis des verwendeten Rotors und der Drehzahl mit der dieser angetrieben wird erfolgen, wobei dies bspw. mittels eines in der Datenverarbeitungseinrichtung hinterlegten Steuerungs- und/oder Regelungsprogramms erfolgen kann. Dabei können zudem in der Datenverarbeitungseinrichtung für die Rotoren Kennwerte (z.B. ein Abdrehfaktor) hinterlegt sein bzw. können durch eine Bedienperson eingegeben werden.

In einer Weiterbildung der Erfindung können dem Verteilgestänge Beleuchtungsmittel zugeordnet sein, so dass die jeweiligen Streufächer auch bei arbeiten in der Nacht sichtbar sind. Wobei jedem Verteilelement ein Beleuchtungsmittel zugeordnet sein kann und/oder wobei am Mittelteil des Verteilgestänges zumindest ein bzw. zwei Beleuchtungsmittel derartig angebracht sein können, dass das Verteilgestänge bzw. insbesondere die Seitenausleger entsprechend beleuchtet werden. Zudem kann vorgesehen sein, dass jeweils nur die Beleuchtungsmittel der Verteilelemente aktiviert sind, mittels denen eine Verteilung von Streugut ausgeführt wird.

Zur Erreichung einer vereinfachten Steuerung und/oder Regelung der Drehlage und/oder Höhenlage des Verteilgestänges kann vorgesehen sein, dass die mit dem Verteilgestänge eine bauliche Einheit bildenden Komponenten, (d.h. die Dosiervorrichtung und/oder die Strömungserzeugungseinrichtung und/oder der Behälter und/oder die Verteileinheit und/oder der Luftstromteiler und/oder die Fallschleuse) am Verteilgestänge bzw. am Träger und/oder am Mittelteil des Verteilgestänges angebracht sind. Insbesondere kann vorgesehen sein, dass die Komponenten derartig am Verteilgestänge angebracht sind, dass dessen Schwerpunkt, sich zumindest annähernd in der Mitte, d.h. im Zentrum des Verteilgestänges befindet und/oder dass sich der Schwerpunkt in einen Bereich befindet, welcher nur einen geringen Abstand zum Zentrum des Verteilgestänges aufweist, bspw. maximal 25 cm oder 50 cm oder 100 cm vom Zentrum entfernt ist, wobei das Zentrum wiederum sich auf einer parallel zur Fahrtrichtung orientierten Ebene befinden kann und wobei diese Ebene wiederum die Lagerung schneiden kann.

Gemäß einem weiteren Aspekt der Erfindung können an der Verteilmaschine und/oder am Verteilgestänge verschiedene Sensoranordnungen angebracht sein. So kann eine Sensoranordnung zur Ermittlung und/oder Auswertung einer Höhenlage des Verteilgestänges vorgesehen sein. Dabei kann die Sensoranordnung zur Ermittlung und/oder Auswertung der Höhenlagen bspw. einen oder mehrere Ultraschallsensoren und/oder Abstandsensoren und/oder dergl. umfassen. Darüber hinaus kann eine Sensoranordnung zur Ermittlung und/oder Auswertung einer Drehlage des Verteilgestänges vorgesehen sein. Dabei kann die Sensoranordnung zur Ermittlung und/oder Auswertung einer Drehlage bspw. einen oder mehrere Winkelsensoren und/oder Beschleunigungssensoren und/oder Drehratensensoren und/oder Drucksensoren oder dergl. umfassen.

Wobei wiederum mittels einer Datenverarbeitungseinrichtung, insbesondere mittels eines in einer Datenverarbeitungseinrichtung hinterlegten Steuerungs- und/oder Regelungsprogramms, aus den Ausgangssignalen der Sensoranordnungen, Steuerungs- und/oder Regelungssignale für die Stelleinrichtung und/oder Stellglieder oder dergl. Antriebe zur automatisieren Steuerung und/oder Regelung der Höhenlage und/oder der Drehlage des Verteilgestänges generierbar sind bzw. generiert werden. Insbesondere kann zur Generierung von Stell- und/oder Regelungssignalen der Stellglieder und/oder der Stelleinrichtung mittels des in der Datenverarbeitungseinrichtung hinterlegten Steuerungs- und/oder Regelungsprogramms auf Basis der mittels der Sensoranordnungen erfassten Höhenlage und/oder Drehlage eine Sensordatenfusion durchgeführt werden.

Zudem kann an der Verteilmaschine, zweckmäßig am Verteilgestänge eine Sensoranordnung (z.B. Radarsensoren oder Kamerasysteme oder dergl.) zur Ermittlung und/oder Auswertung der Streufächer angebracht sein, wobei wiederum auf Basis der erfassten Streufächer die Höhenlage und/oder die Drehlage entsprechend automatisiert steuer- und/oder regelbar und/oder manuell veränderbar sein kann.

Die Stelleinrichtung und/oder das zumindest eine Stellglied oder dergl. Antriebe können zudem mit einer Steuereinrichtung wirkverbunden sein, wobei die Steuereinrichtung insbesondere mit einer elektrischen und/oder pneumatischen und/oder hydraulischen und/oder einer Kombination dieser Energie- und Signalübertragungsarten basierenden Steuerung und/oder Schaltung in Wirkverbindung stehen oder diese mit umfassen bzw. beinhalten kann. Die Steuereinrichtung ist insbesondere derartig ausgeführt, dass mittels dieser die Stelleinrichtung und/oder Stellglieder oder dergl. Antriebe mittelbar oder unmittelbar angesteuert und/oder geregelt und/oder parametrisiert werden können, bzw. dass diese mittelbar oder unmittelbar ansteuerbar und/oder regelbar und/oder parametrisierbar sind. Zudem kann die Datenverarbeitungseinrichtung Bestandteil der Steuerungseinrichtung sein. Die Datenverarbeitungseinrichtung kann zudem bspw. eine Rechnereinheit mit einem in einem Speicher dieser hiterlegtem Steuerungs- und/oder Regelungsprogramm sein.

Gemäß einer Weiterbildung der Erfindung können in der Datenverarbeitungseinrichtung Sollvorgaben für eine Höhenlage und/oder Drehlage eingebbar sein oder hinterlegt sein. Wobei wiederum auf Basis der Sollvorgaben und mittels der Sensoranordnungen Ermittelten Höhenlage und/oder Drehlage mittels der Datenverarbeitungseinrichtung Steuerungs- und/oder Regelungssignale für das Stellglied und/oder die Stelleinrichtung generierbar und/oder ausgebbar sein können. Darüber hinaus wäre es denkbar, dass jeweils für eine Ausbringmenge des Streuguts und/oder für die Streufächer entsprechende Sollvorgaben in der Datenverarbeitungseinrichtung eingebbar und/oder hinterlegt sind, und wiederum die Dosiervorrichtung und/oder die Verteilelemente auf Basis dieser Sollvorgaben mittels der Datenverarbeitungseinrichtung Steuer- und/oder Regelbar sind.

Es sei darauf hingewiesen, dass die im vorliegenden mit Sensor oder Sensoranordnung bezeichneten Elemente für jegliche Sensoren, Messmittel, Erfassungsmittel oder dergl. zutreffen, wenn also im vorliegenden von Sensoren oder von Sensoranordnung die Rede ist, so sind somit gleichermaßen jegliche Sensoren, Messmittel, Erfassungsmittel oder dergl. davon umfasst, wobei zudem eine Sensoranordnung sowohl Sensoren als auch Messmittel und/oder Erfassungsmittel und/oder dergl. mit beinhalten bzw. durch derartige gebildet sein kann.

Die Fahrtrichtung bezieht sich jeweils auf eine Vorwärtsrichtung der Verteilmaschine, d.h. auf eine Richtung mit der die Verteilmaschine während eines Arbeitsprozesses in der Regel über eine zu bearbeitende Bodenfläche oder einem Pflanzenbestand bewegt wird.

In einer weiteren Ausführungsvariante kann eine Förderzeit zudem auf Basis von einer Höhenlage des Verteilgestänges mittels der Datenverarbeitungseinrichtung berechenbar und/oder ausgebbar sein. Das bedeutet, dass bspw. je höher die Höhenlage des Verteilgestänges, d.h. je größer der Abstand der Verteilelemente zur Bodenoberfläche oder zum Pflanzenbestand, desto länger die Förderzeit. So kann insbesondere vorgesehen sein, dass wiederum die Höhenlage als Parameter in der Datenverarbeitungseinrichtung hinterlegt und/oder eingebbar ist und wiederum entsprechend des in der Datenverarbeitungseinrichtung hinterlegten Steuerungs- und/oder Regelungsprogramms anhand der Förderzeit auf Basis der Höhenlage und der pro Zeiteinheit zurückgelegten Wegstrecke der optimale Ein- und Ausschaltpunkt der Dosiervorrichtung berechenbar und/oder ausgebbar ist.

Gemäß einer Alternativen Ausführungsvariante wäre es zudem denkbar, dass die Dosiervorrichtung dem Vorratsbehälter zugeordnet ist und sich die Verteilleitung zwischen der, dem Vorratsbehälter zugeordneten Dosiervorrichtung und einem Verteilelement erstreckt.

Es sei angemerkt, dass in Abhängigkeit der Ein- und Ausschaltpunkte zweckmäßig motorische Antriebe der Dosiervorrichtung bzw. der die Dosiervorrichtung bildenden Dosiereinheiten ein- oder ausschaltbar sein können bzw. aktivierbar oder deaktivierbar sein können.

Es sei noch darauf hingewiesen, dass die Begriffe "Steuerbarkeit" und "Regelbarkeit" bzw. "Steuerung" und "Regelung" sich auf elektronische und/oder pneumatische und/oder hydraulische Steuerungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Es sei noch darauf hingewiesen, dass im vorliegenden die Definition "eine bauliche Einheit bilden" derartig zu verstehen ist, dass die jeweiligen Komponenten dem entsprechenden Maschinenbauteil räumlich zugeordnet sind und bspw. fest mit diesen verbunden sind, insbesondere mittels Maschinenelementen (z.B. Schrauben, Bolzen, Splinten, oder dergl.) und/oder mittels unlösbaren Verbindungen (z.B. schweißen, löten, oder dergl.) mit diesen verbunden sind. So kann die Definition "eine bauliche Einheit bilden" insbesondere bedeuten, dass bspw. die Dosiervorrichtung und/oder die Strömungserzeugungseinrichtung fest mit dem Träger und/oder dem Mittelteil und/oder dem Parallelogramm verbunden sind. Gemäß einer Vorteilhaften Ausführungsvariante kann die Definition "eine bauliche Einheit bilden" zweckmäßig umfassen, dass die jeweiligen eine bauliche Einheit bildenden Komponenten zumindest annähernd die gleichen Bewegungen (z.B. Drehbewegungen oder Höhenbewegungen) wie das Verteilgestänge durchführen, insbesondere zumindest weitgehend synchrone Bewegungen wie das Verteilgestänge oder dessen Mittelteil und/oder dessen Seitenausleger durchführen.

Wenn zuvor das erfindungsgemäße Steuerungs- und/oder Regelungssystem beschrieben wurde, so sei an dieser Stelle ausdrücklich betont, dass alle Aspekte und Ausführungsvarianten, die im Zusammenhang mit dem Steuerungs- und/oder Regelungssystem erläutert wurden, gleichermaßen Teilaspekte des nachfolgend beschriebenen Düngerstreuers sowie des nachfolgenden beschriebenen erfindungsgemäßen Verfahrens betreffen oder sein können. Wenn daher an einer Stelle bei der Beschreibung oder auch bei den Anspruchsdefinitionen vom erfindungsgemäßen Steuerungs- und/oder Regelungssystem die Rede ist, so gilt dies gleichermaßen für den erfindungsgemäßen Düngerstreuer sowie das erfindungsgemäße Verfahren. In umgekehrter Weise gilt dasselbe, so dass auch alle Aspekte die im Zusammenhang mit dem erfindungsgemäßen Düngerstreuer sowie dem erfindungsgemäßen Verfahren erläutert werden, gleichermaßen Teilaspekte des Steuerungs- und/oder Regelungssystems sein können.

Zur Lösung der Aufgaben schlägt die Erfindung zudem eine landwirtschaftliche Verteilmaschine zum Ausbringen von körnigem landwirtschaftlichem Streugut mit einem Steuerungs- und/oder Regelungssystem wie hierin beschrieben vor. Die landwirtschaftliche Verteilmaschine ist insbesondere als pneumatischer Düngerstreuer ausgebildet.

Der erfindungsgemäße Düngerstreuer kann als ein Selbstfahrender oder als ein mittels Zugfahrzeug koppelbarer bzw. gezogener oder als an einem Zugfahrzeug anbaubarer bzw. angebauter Düngerstreuer ausgebildet sein. Der selbstfahrende Düngerstreuer könnte zudem ein autonomes Fahrzeug (z.B. vollautonom oder teilautonom) sein, wobei das autonome Fahrzeug insbesondere für den landwirtschaftlichen Gebrauch geeignet ist. Zudem könnte der Düngerstreuer an ein Selbstfahrendes und/oder autonomes Trägerfahrzeug montierbar bzw. montiert sein.

Zur Lösung der Aufgaben schlägt die Erfindung zudem ein Verfahren zur Steuerung- und/oder Regelung einer landwirtschaftlichen Verteilmaschine zum Ausbringen von körnigem landwirtschaftlichen Streugut, insbesondere pneumatischer Düngerstreuer, mit einer Datenverarbeitungseinrichtung, einem Vorratsbehälter zum mitführen und/oder bereitstellen des Streuguts, sowie einem sich quer zu einer Fahrtrichtung erstreckenden Verteilgestänge, an welchem Verteilgestänge Verteilleitungen mit Verteilelementen zur Verteilung des Streuguts angeordnet sind, wobei zur Förderung des Streuguts zu den Verteilelementen, die Verteilleitungen mit einem Luftvolumenstrom beaufschlagbar sind.

Das Verfahren ist zudem gekennzeichnet durch die Verfahrensschritte:
- Ermittlung und/oder Auswertung der Förderzeit des Streuguts von einer Dosiervorrichtung entlang der Verteilleitung bis zum Verteilelement,
- Ermittlung und/oder Auswertung einer zurückgelegten Wegstrecke der Verteilmaschine pro Zeiteinheit,
- Berechnung und/oder Ausgabe von Ein- und Ausschaltpunkten einer Dosiervorrichtung auf Basis einer Förderzeit und der pro Zeiteinheit zurückgelegten Wegstrecke mittels eines in einer Datenverarbeitungseinrichtung hinterlegten Steuerungs- und/oder Regelungsprogramms.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1A: eine Perspektivansicht einer landwirtschaftlichen Verteilmaschine zum Ausbringen von körnigem landwirtschaftlichen Streugut mit einer dem Verteilgestänge zugeordneten Verteileinheit,
- Figur 1B: eine Seitenansicht einer landwirtschaftlichen Verteilmaschine zum Ausbringen von körnigem landwirtschaftlichen Streugut gemäß der Figur 1A,
- Figur 1C: eine Ansicht von hinten einer landwirtschaftlichen Verteilmaschine zum Ausbringen von körnigem landwirtschaftlichen Streugut gemäß den Figuren 1A und 1B mit einer Mehrzahl von schematisch dargestellten Streufächer,
- Figur 1D: eine Draufsicht einer landwirtschaftlichen Verteilmaschine zum Ausbringen von körnigem landwirtschaftlichen Streugut gemäß den Figuren 1A, 1C und 1D mit einem im vorderen Bereich des Vorratsbehälters angeordneten Auslass,
- Figur 1E: eine Draufsicht einer landwirtschaftlichen Verteilmaschine zum Ausbringen von körnigem landwirtschaftlichen Streugut gemäß den Figuren 1A, 1C und 1D mit einem im mittleren Bereich des Vorratsbehälters angeordneten Auslass,
- Figur 2A: eine Perspektivansicht einer landwirtschaftlichen Verteilmaschine zum Ausbringen von körnigem landwirtschaftlichen Streugut mit zwei dem Verteilgestänge zugeordneten Verteileinheiten,
- Figur 2B: eine Seitenansicht einer landwirtschaftlichen Verteilmaschine zum Ausbringen von körnigem landwirtschaftlichen Streugut gemäß der Figur 2A,
- Figur 2C: eine Ansicht von hinten einer landwirtschaftlichen Verteilmaschine zum Ausbringen von körnigem landwirtschaftlichen Streugut gemäß den Figuren 2A und 2B mit einer Mehrzahl von schematisch dargestellten Streufächer,
- Figur 2D: eine Draufsicht einer landwirtschaftlichen Verteilmaschine zum Ausbringen von körnigem landwirtschaftlichen Streugut, gemäß den Figuren 2A, 2C und 2D mit einem zwei Kammern aufweisenden Vorratsbehälter, wobei jeder Kammer im hinteren Bereich ein Auslass zugeordnet ist,
- Figur 2E: eine Draufsicht einer landwirtschaftlichen Verteilmaschine zum Ausbringen von körnigem landwirtschaftlichen Streugut, gemäß den Figuren 2A, 2C und 2D mit einem zwei Kammern aufweisenden Vorratsbehälter, wobei jeder Kammer im vorderen Bereich ein Auslass zugeordnet ist,
- Figur 3: eine Perspektivansicht einer landwirtschaftlichen Verteilmaschine zum Ausbringen von körnigem landwirtschaftlichen Streugut, mit zwei dem Verteilgestänge zugeordneten Behältern,
- Figur 4A: eine schematische Perspektivansicht einer Anordnung von Dosiereinheiten an einem Verteilgestänge wobei jede Dosiereinheit mit einer Leitung mit Streugut versorgbar ist,
- Figur 4B: eine schematische Perspektivansicht einer Anordnung von Dosiereinheiten an einem Verteilgestänge, wobei jede Dosiereinheit mit zwei Leitungen mit Streugut versorgbar ist,
- Figur 5: eine Schnittansicht von zwei, die Dosiervorrichtung bildenden Dosiereinheiten,
- Figur 6: eine Detailansicht eines durch eine Förderschnecke gebildeten Fördersystems, mittels welchem Streugut in eine Verteileinheit gefördert wird,
- Figur 7: ein Blockschaltbild zur Steuerung- und/oder Regelung der Drehlage und/oder Höhenlage des Verteilgestänges,
- Figur 8: ein Blockschaltbild zur Steuerung- und/oder Regelung der Dosiervorrichtung und/oder des Fördersystems,
- Figur 9: ein Blockschaltbild zur Steuerung- und/oder Regelung der Ein- und Ausschaltzeitpunkte der Dosiervorrichtung.

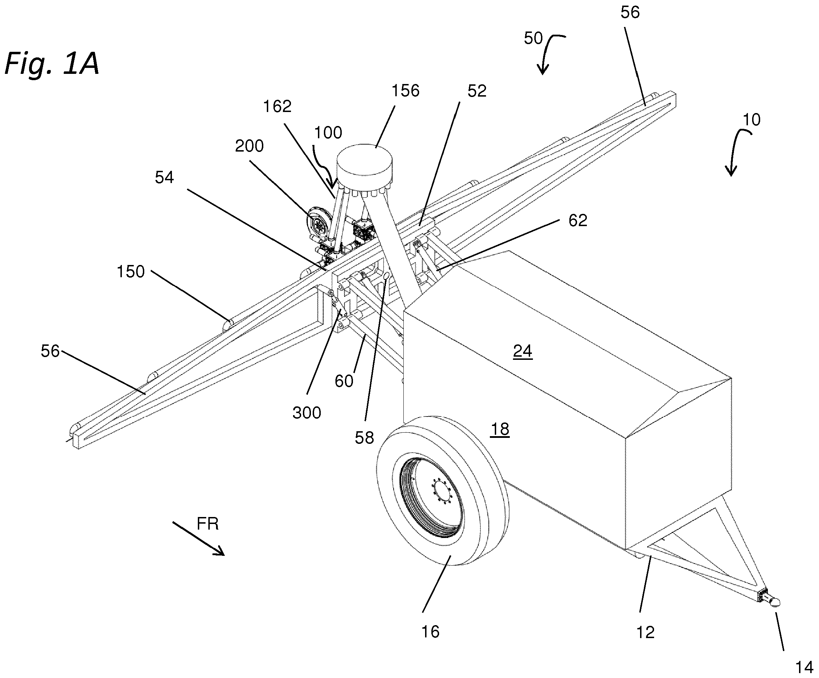

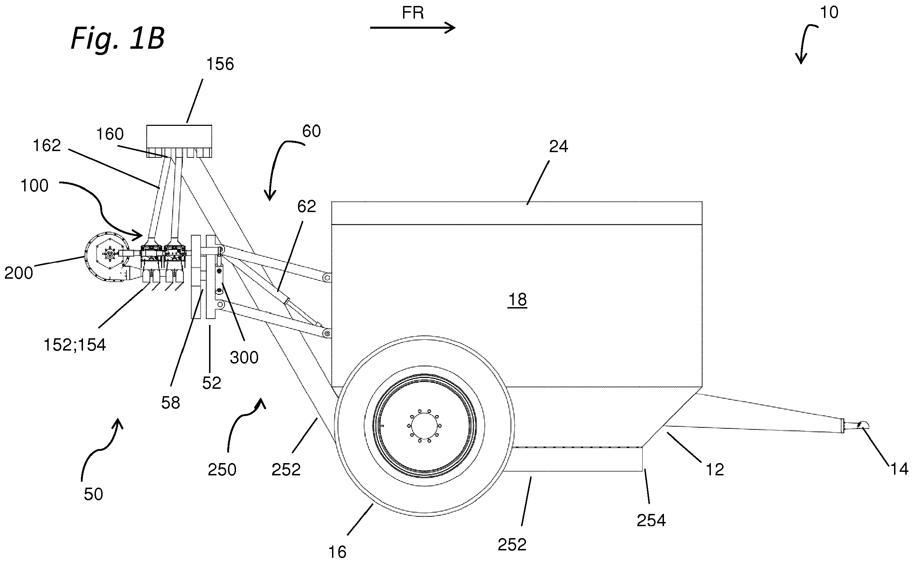

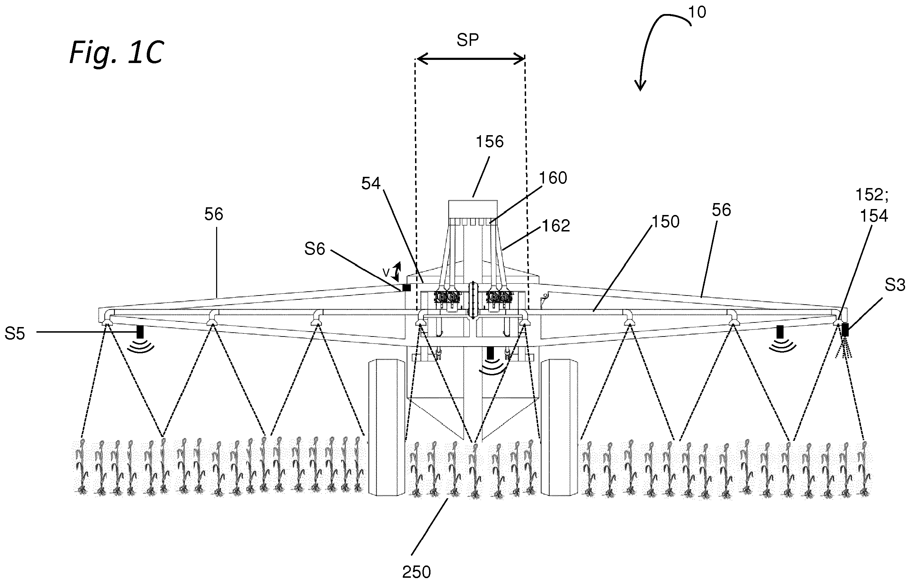

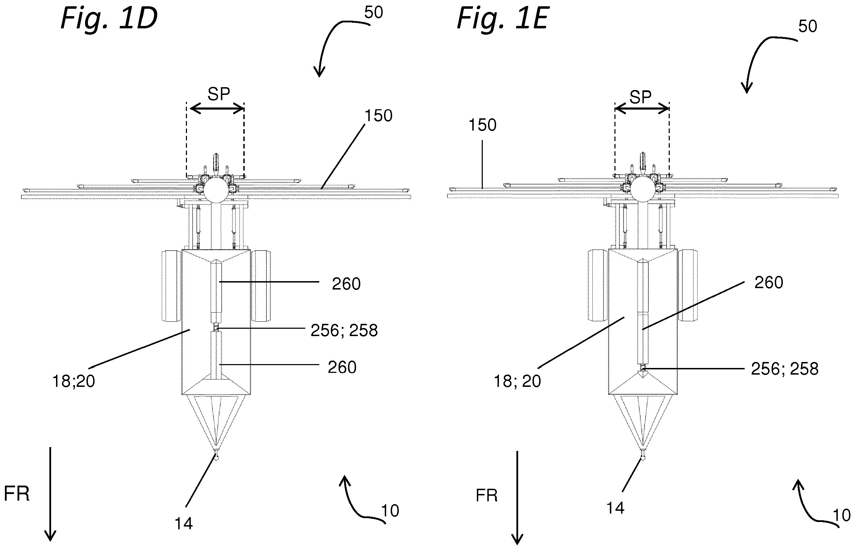

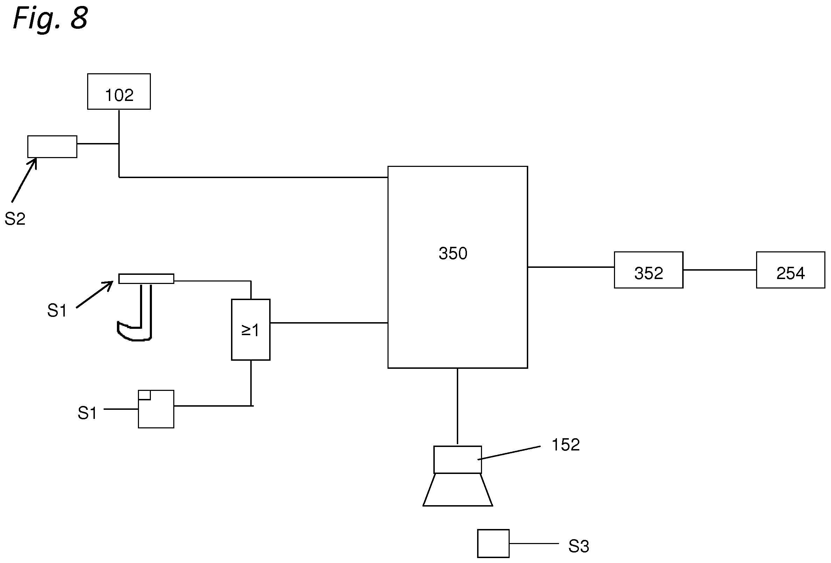

Die in den Figuren 1 bis 9 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße landwirtschaftliche Verteilmaschine, sowie das erfindungsgemäße Verfahren ausgestaltet und ausgeführt sein können und stellen keine abschließende Begrenzung dar.

Ausführungsbeispiele eines erfindungsgemäßen Düngerstreuers 10 zum Ausbringen von körnigem landwirtschaftlichem Streugut gehen aus den verschiedenen Ansichten der Figuren 1 bis 3 hervor. Beim Düngerstreuer 10 handelt es sich insbesondere um einen Düngerstreuer, mittels welchem Düngerstreuer körnige bzw. granulare landwirtschaftliche Streugüter bzw. Verteilgüter, wie bspw. Dünger oder Mikrogranulate, aber auch Saatgüter ausgebracht werden können.

Der Düngerstreuer 10 ist gemäß der Figuren 1, 2 und 3 jeweils als ein mittels eines Zugfahrzeugs koppelbarer bzw. gezogener landwirtschaftlicher Düngerstreuer 10 ausgebildet. Der erfindungsgemäße Düngerstreuer 10 könnte aber auch ein Selbstfahrende und/oder ein an einem Zugfahrzeug anbaubarer bzw. angebauter Düngerstreuer 10 sein. Der Düngerstreuer 10 umfasst jeweils eine Rahmenkonstruktion 12 zum Tragen der Baugruppen der Düngerstreuer 10, wobei sich am vorderen Ende der Rahmenkonstruktion 12 eine Verbindungseinrichtung 14 (gemäß der Figuren 1 bis 3 in Form einer Zugöse) befindet, welche Verbindungseinrichtung 14 derartig ausgebildet ist, um den Düngerstreuer 10 mit einem nicht dargestellten Zugfahrzeug verbinden zu können. Um den Düngerstreuer 10 über bspw. eine Ackerfläche bewegen zu können, umfasst dieser zudem ein Fahrwerk 16, welches Fahrwerk 16 gemäß den Ausführungsbeispielen zwei Laufräder umfasst. Dabei wäre es auch denkbar, dass das Fahrwerk 16 durch ein oder mehrere Bandlaufwerke bzw. Raupenlaufwerke gebildet wird.

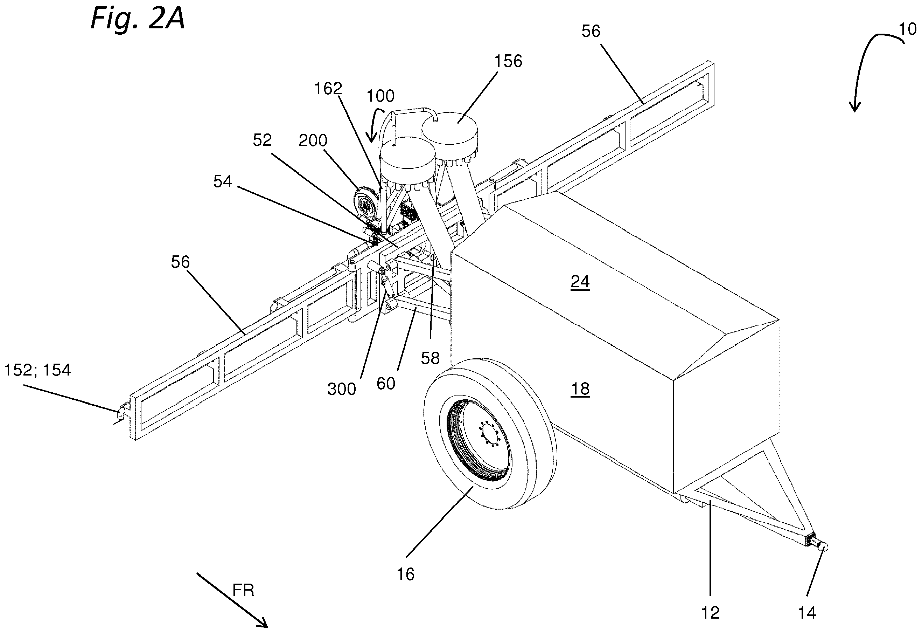

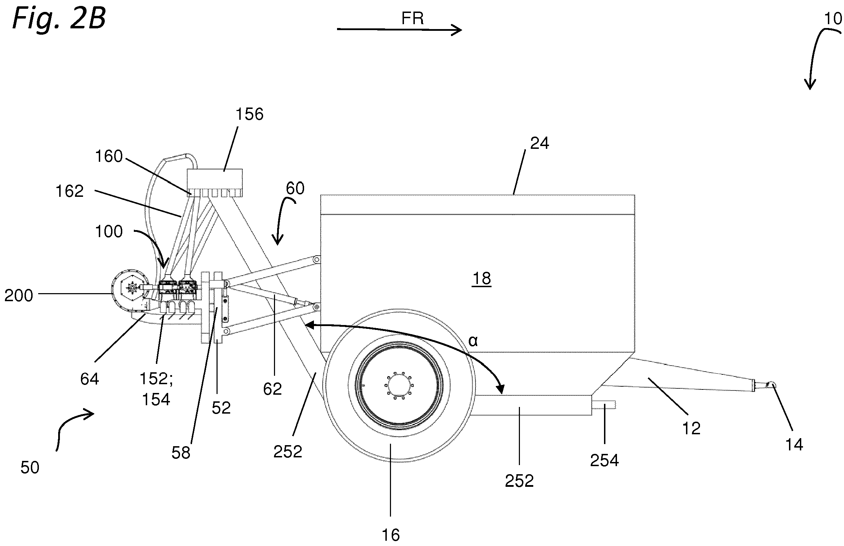

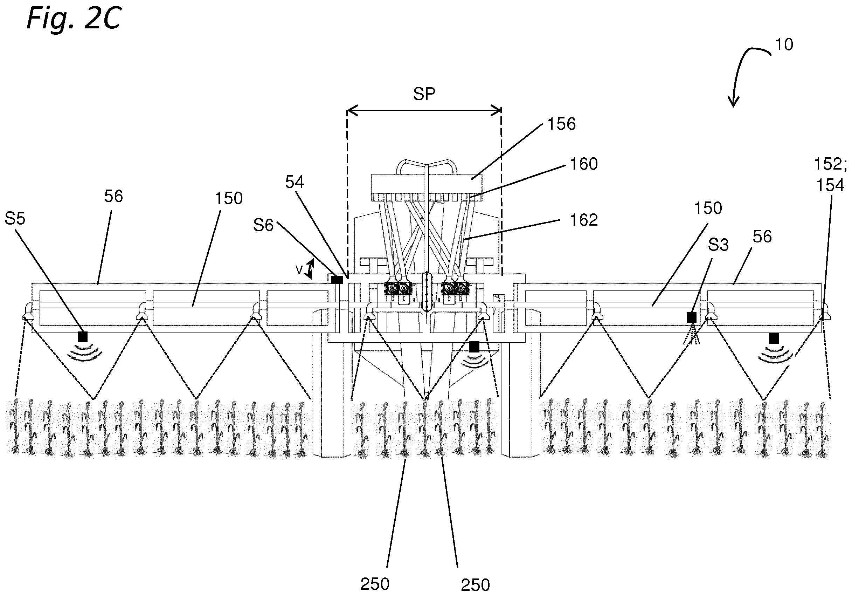

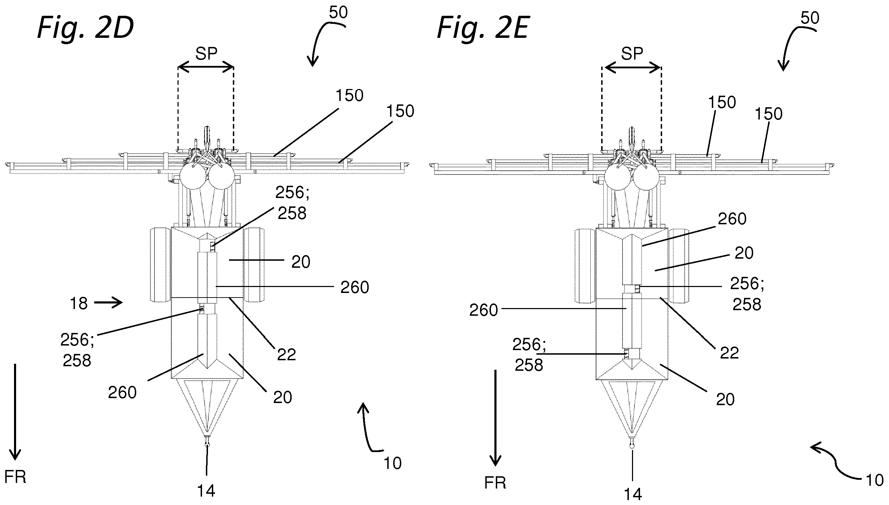

Zum Mitführen und/oder Bereitstellen des Streuguts ist zudem an der Rahmenkonstruktion 12 ein Vorratsbehälter 18 angebracht. Dabei kann der Vorratsbehälter 18 in Abhängigkeit der Anzahl an verschiedenen Streugüter eine oder mehrere Kammern 20 aufweisen (vergl. bspw. Figur 1D und 2D). Gemäß den Ausführungsbeispielen der Figur 2 weisen die Kammern 20 hierbei gleiche Volumen auf, wobei diese auch unterschiedliche Volumen aufweisen können, so dass eine Anpassung an die jeweils benötigte Menge an Streugut ermöglicht wird. Die Kammern 20 sind zudem durch ein Zwischenblech 22 in einer gemeinsamen Schweißbaugruppe gebildet. Dabei könnten die Kammern 20 auch durch ein Zwischenblech 22 in einer Montagebaugruppe gebildet werden. Auch könnten die Kammern 20 durch mehrere Schweißbaugruppen und/oder Kunststofftanks und/oder Montagebaugruppen gebildet werden, welche wiederum als eine Einheit den Vorratsbehälter 18 bilden können.

Der Vorratsbehälter 18 weist ein Deckelelement 24 auf. Zudem weisen die mehreren Kammern 20 gemäß der Figuren 2 ebenso ein gemeinsames Deckelelement 24 auf. Zudem kann der Vorratsbehälter 18 bzw. können die Kammern 20 bzw. kann zumindest eine der Kammern 20 Druckdicht ausgebildet sein. Auch könnte der Vorratsbehälter 18 bzw. die Kammern 20 bzw. zumindest eine der Kammern 20 mit einem Überdruck beaufschlagt sein.

Zur Erreichung einer großen Verteilbreite, d.h. zur Erreichung einer großen Schlagkraft mittels des Düngerstreuers 10 weist dieser ein sich quer zur Fahrrichtung FR erstreckendes Verteilgestänge 50 auf. Wobei das Verteilgestänge 50 einen mit der Rahmenkonstruktion 12 verbundenen Träger 52, ein Mittelteil 54 und schwenkbar am Mittelteil 54 angebrachte Seitenausleger 56 aufweist. Das Verteilgestänge 50 kann hierbei bspw. Arbeitsbreiten von 20 Meter, 30 Meter oder mehr aufweisen.

Das Verteilgestänge 50 ist zudem mittels einer Lagerung 58 drehbar zum bzw. am Träger 52 angebracht. Insbesondere ist das Verteilgestänge 50 mittels der Lagerung 58 quer zur Fahrtrichtung FR drehbar gelagert. Die Lagerung 58 ist gemäß der Ausführungsbeispiele eine parallel zur Fahrtrichtung FR orientiere Achse bzw. Drehachse, wobei hierbei auch andere Ausführungsvarianten denkbar wären, bspw. könnte die Lagerung 58 auch ein zumindest abschnittsweise kugelförmiges Element sein, um welches zumindest abschnittsweise kugelförmige Element sich das Verteilgestänge 50 quer zur Fahrtrichtung FR drehen kann.

Zur Einhaltung einer maximal zulässigen Transportbreite können die Seitenausleger 56 um Aufrechte (siehe bspw. Figur 2A) und/oder um horizontale Achsen schwenkbar am Mittelteil 54 angebracht sein. Auch können die Seitenausleger 56 aus zwei oder mehr Segmenten zusammengesetzt sein, welche Segmente wiederum um aufrechte und/oder horizontale Achsen zueinander verschwenkbar sein können. Das Verteilgestänge 50 bzw. das Mittelteil 54 und/oder die Seitenausleger 56 sind zudem zumindest abschnittsweise durch ein Fachwerk bzw. durch eine Fachwerkkonstruktion gebildet. Darüber hinaus weist das Fachwerk bzw. die Fachwerkkonstruktion eine größere Höhe als Tiefe auf.

Das Verteilgestänge 50 ist zudem höhenverstellbar an der Rahmenkonstruktion 12 angebracht, um somit eine Höhenlage des Verteilgestänges 50 zu einer Rahmenkonstruktion 12 bzw. zu einer Bodenoberfläche oder einem Pflanzenbestand Steuern und/oder Regeln zu können. Die Höhenverstellung erfolgt mittels einer, zwischen der Rahmenkonstruktion 12 und dem Träger 52 angeordneten Parallelogramm 60 und zumindest einem der Parallelogramm 60 zugeordnetem Stellglied 62, wobei das Stellglied 62 gemäß den Figuren ein hydraulisch oder pneumatisch betriebener Linearantrieb, insbesondere ein Zylinder, ist.

Erfindungsgemäß ist vorgesehen, dass eine mit dem Verteilgestänge 50 eine bauliche Einheit bildende Dosiervorrichtung 100 vorgesehen ist, mittels welcher Dosiervorrichtung 100 jeweils das Streugut in einer gewünschten Menge in eine Mehrzahl an, am Verteilgestänge 50 angebrachter Verteilleitung 150 dosiert werden kann. Die Verteilleitungen 150 erstrecken sich jeweils von der Dosiervorrichtung 100 aus in unterschiedlichen Längen entlang dem Verteilgestänge 50. Zudem weisen die Verteilleitungen 150 an dessen äußerem Ende ein Verteilelement 152 auf, wobei hierbei auch vorgesehen sein kann, dass an einer Verteilleitungen 150 zwei oder mehr Verteilelemente 152 angebracht sind, so dass bspw. ein Verteilelement 152 im Verlauf sowie ein weiteres Verteilelement 152 am äußeren Ende der Verteilleitung 150 angebracht ist.

Gemäß der Ausführungsbeispiele ist das Verteilelement 152 jeweils durch einen Prallteller 154 gebildet, gegen welchen Prallteller 154 das Streugut mittels eines Luftvolumenstroms gefördert wird und mittels welches Prallteller 154 anschließend das Streugut fächerförmig in Richtung einer Bodenoberfläche oder einem Pflanzenbestand verteilt wird (siehe Figur 1A und 2A).

Gemäß den Ausführungsbeispielen der Figuren 1C und 2C ist es zudem möglich, dass die mittels der Verteilelemente 152 erzeugten Streufächer in Bereichen, in denen keine Nutzpflanzen vorhanden sind und/oder in Bereichen der Fahrspur des Fahrwerks 16, die Streufächer jeweils derartig anpassbar sind, dass in diesen Bereichen kein Streugut ausgebracht wird. Wobei dies bspw. mittels eines Verteilelements 152 erreicht werden kann, mittels welchem ein asymmetrischer Streufächer erzeugt wird. In einer Weiterbildung der Erfindung kann zudem vorgesehen sein, dass die mittels der Dosiervorrichtung 100 in die Verteilleitungen 150 mit derartigen Verteilelementen 152 zugeführte Menge an Streugut entsprechend verringert bzw. angepasst wird.

Der Düngerstreuer 10 gemäß der Ausführungsbeispiele ist als pneumatischer Düngerstreuer 10 ausgebildet, was bedeutet, dass das Streugut von der Dosiervorrichtung 100 entlang der Verteilleitungen 150 mittels eines Luftvolumenstroms in Richtung der Verteilelemente 152 gefördert wird. Um einen derartigen Luftvolumenstrom zu erzeugen sind die Verteilleitungen 150 mittels wenigstens einer Strömungserzeugungseinrichtung 200 verbunden. Dabei ist die Strömungserzeugungseinrichtung 200 insbesondere durch ein oder mehrere Gebläse gebildet. Die Strömungserzeugungseinrichtung 200 ist insbesondere derartig ausgeführt, dass mittels dieser in den Verteilleitungen 150 unterschiedliche Luftvolumenströme erzeugbar sind, insbesondere Luftvolumenströme mit verschiedenen Strömungsgeschwindigkeiten. Hierzu kann die Strömungserzeugungseinrichtung 200 mittels eines motorischen Antriebs mit verschiedenen Drehzahlen betreibbar sein.

Gemäß den Ausführungsbeispielen ist die Strömungserzeugungseinrichtung 200 jeweils dem Verteilgestänge 50 zugeordnet. Wie insbesondere aus den Figuren 1B und 2B sowie 4A und 4B ersichtlich ist, bildet die Strömungserzeugungseinrichtung 200 somit eine bauliche Einheit mit dem Verteilgestänge 50, wobei die Strömungserzeugungseinrichtung 200 hierfür an einer, mit dem Verteilgestänge 50 verbundenen Haltevorrichtung 64 angebaut, und somit fest verbunden ist.

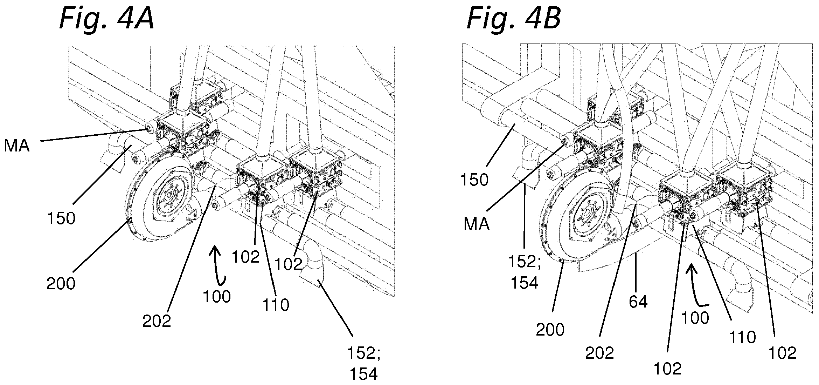

Um mittels einer Strömungserzeugungseinrichtung 200 mehrere Verteilleitungen 150 mit einem jeweiligen Luftvolumenstrom zu beaufschlagen ist gemäß der Figuren 4A und 4B vorgesehen, dass der Strömungserzeugungseinrichtung 200 ein Luftstromteiler 202 zugeordnet ist. Der Luftstromteiler 202 mündet hierfür in der Strömungserzeugungseinrichtung 200 und weist eine Mehrzahl, entsprechend der Anzahl an Verteilleitungen 150, von Anschlüssen auf. Der Luftstromteiler 202 bildet wiederum mit dem Verteilgestänge 50 eine bauliche Einheit.

Zur Erreichung einer verschleißoptimierten Düngerstreuer 10 sowie eines vereinfachten Aufbaus der Düngerstreuer 10 ist vorgesehen, dass die Versorgung der Dosiervorrichtung 100 mittels eines zwischen dem Vorratsbehälter 18 und dem Verteilgestänge 50 angeordneten Fördersystems 250 erfolgt. Gemäß den Ausführungsbeispielen der Figuren 1, 2 und 3, ist in Abhängigkeit der Anzahl an Streugüter jeweils ein Fördersystem 250 vorgesehen, wobei das Fördersystem 250 in den Figuren stark vereinfacht jeweils als eine Verbindung 252 in Form einer Förderleitung abgebildet ist.

Das Fördersystem 250 ist zweckmäßig derartig ausgeführt, dass mittels diesem die geförderte Menge an Streugut variabel veränderbar, d.h. steuer- und/oder regelbar ist. Wobei die Variation des Streuguts insbesondere durch eine Variation, d.h. durch eine Steuerung und/oder Regelung eines Antriebssystems 254 des Fördersystems 250 erfolgen kann. Eine derartige Variation kann bspw. eine Erhöhung oder Verringerung einer Antriebsdrehzahl sein. Insbesondere ist die mittels des Fördersystems 250 geförderte Menge an Streugut in Abhängigkeit der mittels der Dosiervorrichtung 100 dosierten Menge an Streugut variierbar.

Das Fördersystem 250 gemäß den Ausführungsbeispielen setzt sich aus mehreren Abschnitten zusammen, welche Abschnitte zudem in einem Winkel α (vergl. Figur 2B) zueinander angeordnet sind. Wobei der Winkel α zudem veränderbar sein kann, insbesondere in Abhängigkeit einer Höhenlage des Verteilgestänges 50 veränderbar sein kann.

Das Fördersystem 250 wird gemäß der Figuren 1 und 2 durch Förderschnecken 256 gebildet. Alternativ zu einer Förderschnecke 256 wären bspw. auch ein Förderband und/oder mehrere Förderbandabschnitte denkbar, welche wiederum in einem Winkel α angeordnet sein können. Auch eine Kombination aus Förderschnecke 256 und Förderband wäre denkbar bzw. einsetzbar, welche wiederum in einem Winkel α zueinander angeordnet sein können.

Das Fördersystem 250 verläuft jeweils zumindest abschnittsweise entlang der Außenkontur des Vorratsbehälters 18 bzw. entlang der Bodenfläche und einer Seitenwand.

Das Fördersystem 250 weist einen Einlass 258 auf, welcher Einlass 258 dem Auslass 258 des trichterförmigen Vorratsbehälters 18 bzw. der Kammer 20 des Vorratsbehälters 18 zugeordnet ist. Gemäß den Ausführungsbeispielen bildet das Fördersystem 250 somit den Boden bzw. den Auslass 258 des Vorratsbehälters 18 aus.

Wie aus den Figuren 1D und 1E sowie 2D und 2E ersichtlich ist, kann dem Einlass 258 eine in dessen Position veränderbare bzw. verschiebbare Abdeckung 260 zugeordnet sein, wobei durch eine entsprechende Veränderung der Position jeweils definierbar ist, welcher Bereich des Vorratsbehälters 18 zuerst bzw. zuletzt entleer werden soll.

Wie aus den Figuren 1, 2 und 6 ersichtlich ist, kann in einer Ausführungsform vorgesehen sein, dass das mittels des Fördersystems 250 geförderte Streugut in eine oder in Richtung zu einer Verteileinheit 156 gefördert wird. Dabei wird mittels der Verteileinheit 156 das Streugut in eine Mehrzahl an Abgängen 160 aufgeteilt, von welchen Abgängen 160 das Streugut wiederum mittels Leitungen 162 (zur Vereinfachung nur einige dargestellt) zur Dosiervorrichtung 100 weitergeleitet werden kann. Zudem kann die Verteileinheit 156 wiederum mit einem Luftvolumenstrom beaufschlagt sein. Zudem bildet die Verteileinheit 156 gemäß den Ausführungsbeispielen wiederum eine bauliche Einheit mit dem Verteilgestänge 50.

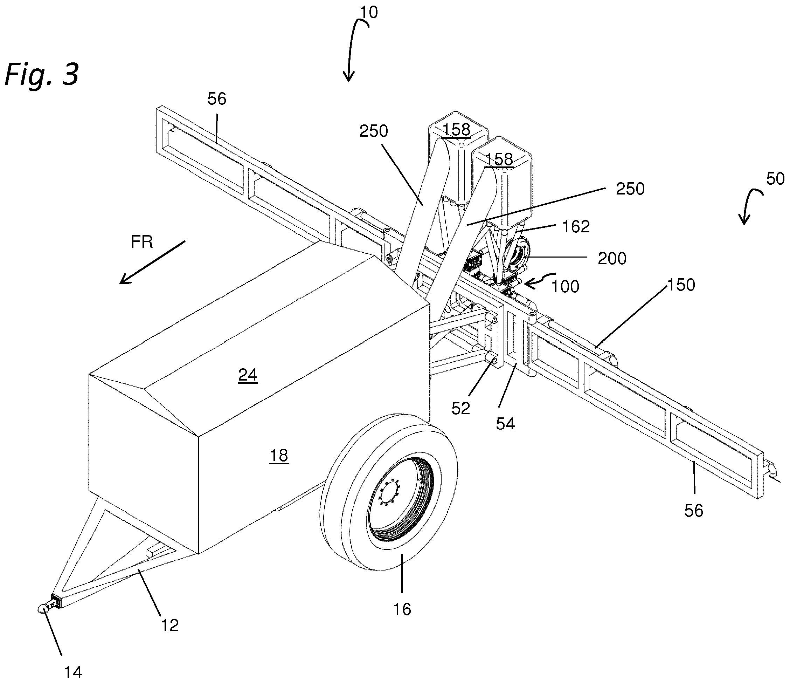

Wie aus der Figur 3 zudem ersichtlich ist, kann in einer weiteren Ausführungsform vorgesehen sein, dass das mittels des Fördersystems 250 geförderte Streugut in einen oder in Richtung zu einem, insbesondere mit dem Verteilgestänge 50 eine bauliche Einheit bildenden Behälter 158 gefördert wird, von welchem Behälter 158 das Streugut anschließend zu der Dosiervorrichtung 100 weiter geleitet wird.

Zudem Entspricht die Anzahl an Verteileinheiten 156 bzw. Behälter 158 wiederum der Anzahl an Fördersystemen 250 und somit insbesondere der Anzahl an verschiedenen Streugütern.

Die Dosiervorrichtung 100 und das Verteilgestänge 50 bilden eine derartige bauliche Einheit, dass die Bewegungen des Verteilgestänges 50 synchron und/oder zumindest weitgehend synchron von der Dosiervorrichtung 100 ausgeführt werden.

Weitere Details der Dosiervorrichtung 100 gehen aus den schematischen Perspektivansichten der Figuren 4A und 4B hervor, wobei gemäß der Figur 4A jede Dosiereinheit mit einer Leitung mit Streugut versorgbar ist, und wobei gemäß der Figur 4B jede Dosiereinheit mit zwei Leitungen mit Streugut versorgbar ist,

Die Dosiervorrichtung 100 umfasst mehrere Dosiereinheiten 102, wobei zudem vorgesehen ist, dass jeder Verteilleitung 150 eine Dosiereinheit 102 zugeordnet ist. Vorzugsweise erfolgt die Zuführung an Streugut mittels der Dosiereinheiten 102 zu den Verteilleitungen 150 mit variablen Mengen.

Die Dosiereinheiten 102 sind jeweils unabhängig voneinander betreibbar, d.h. jede Dosiereinheit 102 kann einen eigenen motorischen Antrieb MA aufweisen, mittels welchem wiederum die Drehzahlen der Dosiereinheiten 102 variabel veränderbar sein können. Ebenso können mittels des motorischen Antriebs MA die Dosiereinheiten 102 unabhängig voneinander aktiviert oder deaktiviert werden. Mittels der Dosiereinheiten 102 wird somit jeweils das Streugut in Verteilleitungen 150 dosiert und von einem zumindest in den Verteilleitungen 150 anliegenden Luftvolumenstrom in Richtung der Verteilelemente 152 gefördert.

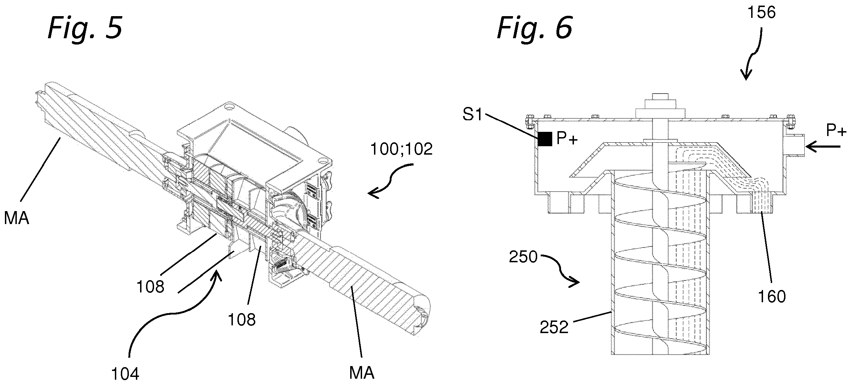

Weitere Details einer Ausführungsvariante einer Dosiereinheit 102 gehen aus der Schnittansicht der Figur 5 hervor. Die Dosiereinheit 102 ist hierbei als Zellenradschleuse 104 ausgebildet, d.h. in einem Gehäuse 106 ist ein mittels eines motorischen Antriebs MA drehbar angetriebener Rotor 108 angeordnet. Der Rotor 108 weist jeweils Öffnungen bzw. Aussparungen auf, welche im Betrieb mit Streugut gefüllt werden. In Abhängigkeit der Größe der Öffnungen und Aussparungen sowie in Abhängigkeit der Antriebsdrehzahl des Rotors 108 kann jeweils die mittels der Dosiereinheit 102 dosierte Menge an Streugut verändert werden, d.h. erhöht oder verringert werden.

Im Ausführungsbeispiel der Figur 5 sind zudem im Gehäuse 106 zwei Rotoren 108 angeordnet, d.h. es werden somit mittels eines Gehäuses 106 zwei Dosiereinheiten 102 gebildet. Dabei ist wiederum jedem Rotor 108 ein motorischer Antrieb MA zugeordnet. Der motorische Antrieb MA gemäß der Figur 5 ist ein Elektromotor. Es wären jedoch auch andere Ausführungsvarianten von motorischen Antrieben MA denkbar, bzw. verwendbar, bspw. auch hydraulisch betriebene Motoren.

Gemäß der Figuren 4 kann zur Verbindung 252 der Dosiervorrichtung 100 mit den Verteilleitungen 150 eine Fallschleuse 110 vorgesehen sein. Dabei kann jeweils vorgesehen sein, dass jedem Gehäuse 106 eine Fallschleuse 110 nachgeordnet ist, wobei wiederum die Anzahl an Anschlüssen der Fallschleuse 110 identisch und/oder unterschiedlich zur Anzahl von mit diesen verbundene Fallschleusen 110 sein kann. Darüber hinaus ist die Fallschleuse 110 mit dem Luftstromteiler 202 bzw. mit der Strömungserzeugungseinrichtung 200 verbunden.

Jede Verteilleitung 150 mit daran angeordnetem Verteilelement 152 kann darüber hinaus einer sog. Teilbreite entsprechen, so dass bspw. durch Aktivierung und/oder Deaktivierung der Dosiereinheit 102 auch Teilbreiten schaltbar sind. Jede Teilbreite kann bspw. einer Arbeitsbreite von 1,5 Meter oder mehr oder weniger entsprechen.

Gemäß der Figuren 4 ist zudem vorgesehen, dass in der Fallschleuse 110, Streugutdurchfluss beeinflussende Elemente angebracht sind, bspw. Klappen zum Verschließen oder zur Freigabe der Streugutdosierung mittels der Dosiereinheit 102 in die Fallschleuse 110 bzw. in die Verteilleitungen 150. Die Klappen können zudem manuell verstellbar sein und/oder mittels Stellelementen automatisiert bzw. motorisch verstellbar sein.

Zur Erreichung einer vereinfachten Steuer- und/oder Regelbarkeit der Drehlage und/oder Höhenlage des Verteilgestänges 50 kann vorgesehen sein, dass die mit dem Verteilgestänge 50 eine bauliche Einheit bildenden Komponenten, (d.h. die Dosiervorrichtung 100 und/oder die Strömungserzeugungseinrichtung 200 und/oder der Behälter 158 und/oder die Verteileinheit 156 und/oder der Luftstromteiler 202 und/oder die Fallschleuse 110) am Träger 52 angebracht sind und/oder dass diese am Mittelteil 54 des Verteilgestänges 50 angebracht sind. Insbesondere kann vorgesehen sein, dass die Komponenten derartig am Verteilgestänge 50 angebracht sind, dass dessen Schwerpunkt SP, sich zumindest annähernd in der Mitte, d.h. im Zentrum des Verteilgestänges 50 befindet und/oder dass sich der Schwerpunkt SP in einen Bereich befindet welcher nur einen geringen Abstand zum Zentrum des Verteilgestänges 50 aufweist, bspw. maximal 25cm oder 50cm oder 100cm vom Zentrum entfernt ist (siehe gestrichelte Linien der Figuren 1D, 1E und 2D, 2E), wobei das Zentrum wiederum sich auf einer Parallel zur Fahrtrichtung orientierten Ebene befinden kann und wobei diese Ebene wiederum die Lagerung 58 schneiden kann.

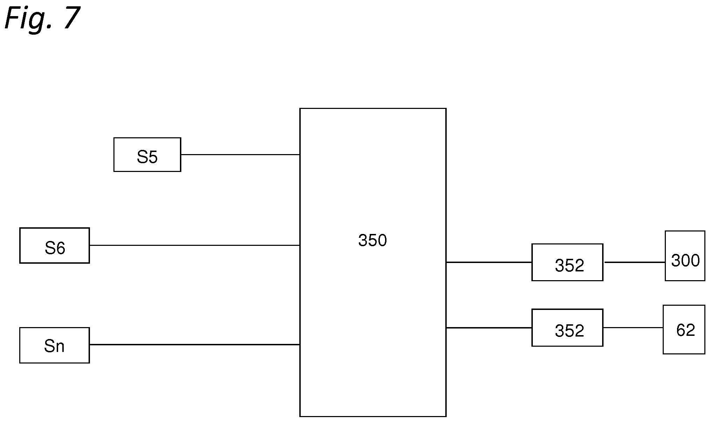

Weitere Details zur Steuerung- und/oder Regelung der Drehlage und/oder Höhenlage des Verteilgestänges 50 gehen aus dem Blockschaltbild der Figur 7 hervor. Dargestellt ist hierbei zunächst ein Steuerungs- und/oder Regelungssystem zur Variation der Drehlage und/oder der Höhenlage des Verteilgestänges, insbesondere ein Steuerungs- und/oder Regelungssystem einer Stelleinrichtung 300 und/oder eines Stellgliedes 62.

Das Steuerungs- und/oder Regelungssystem umfasst zunächst eine Sensoranordnung S5 zur Ermittlung und/oder Auswertung einer Höhenlage (z.B. mittels Ultraschallsensoren oder Abstandsensoren oder dergl.) des Verteilgestänges 50, insbesondere in Bezug zu einer Rahmenkonstruktion 12 der Düngerstreuer 10 bzw. zu einer Bodenoberfläche oder einem Pflanzenbestand. Das Steuerungs- und/oder Regelungssystem umfasst zudem eine Sensoranordnung S6 zur Ermittlung und/oder Auswertung einer Drehlage des Verteilgestänges 50, in Bezug auf den Träger 52 und/oder eine Rahmenkonstruktion 12 der Düngerstreuer 10. Darüber hinaus wären noch weitere Sensoranordnungen Sn möglich bzw. denkbar. Bspw. wäre eine Sensoranordnung zur Ermittlung und/oder Auswertung der Bewegungen der Stelleinrichtung 300 und/oder des zumindest einen Stellgliedes 62 denkbar.

Mittels einer Datenverarbeitungseinrichtung 350, insbesondere auf Basis eines in der Datenverarbeitungseinrichtung 350 hinterlegten Steuerungs- und/oder Regelungsprogramm werden anschließend aus den Ausgangssignalen der Sensoranordnungen S5; S6; Sn Steuerungs- und/oder Regelungssignale für die Stelleinrichtung 300 und/oder das zumindest eine Stellglied 62 zur automatisieren Steuerung und/oder Regelung des Verteilgestänges 50 generiert und/oder ausgegeben. Wobei zweckmäßig mittels der Datenverarbeitungseinrichtung 350 ein Ventil 352 ansteuerbar und/oder regelbar und/oder parametrisierbar ist, mittels welches Ventils 352 wiederum die Stelleinrichtung 300 und/oder die Stellglieder 62 steuerbar und/oder regelbar sind.

Weitere Details zur Steuerung- und/oder Regelung der Dosiervorrichtung 100 und/oder des Fördersystems 250 gehen aus dem Blockschaltbild der Figur 7 hervor. Je nach Ausführungsvariante der Düngerstreuer kann dem Behälter 158 oder der Verteileinheit 156 eine Sensoranordnung S2 zur Ermittlung und/oder Auswertung von dessen Füllstand zugeordnet sein, wobei der Füllstand an eine Datenverarbeitungseinrichtung 350 übertragen wird. Zudem ist der Dosiereinheit 102 wiederum eine Sensoranordnung S2 zur Ermittlung und/oder Auswertung der dosierten Menge an Streugut zugeordnet. Wobei auch wiederum diese Werte an eine Datenverarbeitungseinrichtung übertragbar sind. Wobei eine Ermittlung und/oder Auswertung der dosierten Menge auch auf Basis des verwendeten Rotors und der Drehzahl mit dem der Rotor angetrieben wird, mittels der Datenverarbeitungseinrichtung 350 ermittelbar und/oder auswertbar sein kann.

Zudem ist es möglich, dass eine weitere Sensoranordnung S3 zur Ermittlung und/oder Auswertung der Streufächer vorgesehen ist, bzw. zur Überwachung der Verteilelemente 152. Mittels dieser Sensoranordnung S3 kann wiederum eine Auswertung der verteilten Menge an Streugut mittels der Datenverarbeitungseinrichtung 350 erfolgen.

In Abhängigkeit des somit erfassten Füllstands und/oder der ausgebrachten und/oder dosierten Menge an Streugut wird anschließend wiederum bspw. ein Ventil 352 oder dergl. mittels der Datenverarbeitungseinrichtung 350 angesteuert und somit eine Antriebssystem 254 des Fördersystems 250 aktiviert oder deaktiviert und/oder die mittels des Fördersystems 250 geförderte Menge an Streugut erhöht oder verringert.

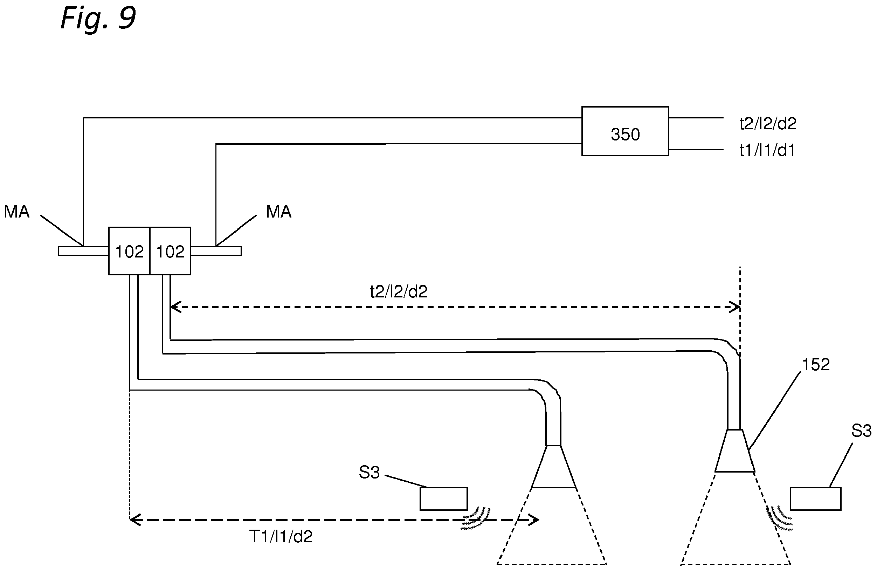

Ein Blockschaltbild zur Steuerung- und/oder Regelung der Ein- und Ausschaltzeiten der Dosiervorrichtung geht aus der Figur 9 hervor. Dargestellt sind hierbei zwei Verteilleitungen 150 welche, ausgehend von einer Dosiervorrichtung bzw. einer Dosiereinheit 102 jeweils unterschiedliche Längen l1, l2 und/oder Querschnitte d1, d2 aufweisen. In Abhängigkeit der Länge l1, l2 und/oder der Querschnitte d1, d2 und/oder des in den Verteilleitungen 150 vorhandenen Luftvolumenstroms variiert jeweils die Durchflusszeit t1, t2 des Streuguts durch die Verteilleitung 150.

Um die Verteilmaschine 10 auch bei Section-Control-Anwendungen verwenden zu können, ist zudem vorgesehen, dass die Längen l1, l2 und/oder Querschnitte d1, d2, und/oder Luftvolumenströme und/oder Durchflusszeiten t1, t2 jeweils an eine Datenverarbeitungseinrichtung 350 übertragen werden und/oder als Parameter in dieser hinterlegt sind und wobei mittels der Datenverarbeitungseinrichtung anhand dieser übertragenen Parameter insbesondere der motorische Antrieb MA der Dosiereinheiten 102 entsprechend angesteuert wird, d.h. entsprechend Ein- oder Ausgeschaltet wird.

Zudem kann eine Sensoranordnung S3 zur Ermittlung und/oder Auswertung der jeweiligen Streufächer vorgesehen sein, d.h. anhand der somit mittels der Sensoranordnung S3 zur Ermittlung und/oder Auswertung der Streufächer erfassten Streufächer kann wiederum mittels der Datenverarbeitungseinrichtung 350 eine Ansteuerung der motorischen Antriebe MA erfolgen. Insbesondere kann somit die Zeit, die das Streugut von der Dosiereinheit 102 bis zum Verteilelement 152 benötigt erfasst bzw. ermittelt werden und entsprechend als Parameter von der Datenverarbeitungseinrichtung 350 verarbeitet und/oder ausgewertet werden.

Die Durchflusszeit t1, t2 kann somit insbesondere derartig verarbeitet werden, das anhand einer aktuellen Position der Verteilmaschine 10 und einer Fahrgeschwindigkeit dieser, eine entsprechende voreilende oder nacheilende Aktivierung und/oder Deaktivierung der motorischen Antriebe MA der Dosiereinheiten 102 erfolgt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Verteilmaschine
- 12: Rahmenkonstruktion
- 14: Verbindungseinrichtung
- 16: Fahrwerk
- 18: Vorratsbehälter
- 20: Kammer
- 22: Zwischenblech
- 24: Deckelelement

- 50: Verteilgestänge
- 52: Träger
- 54: Mittelteil
- 56: Seitenausleger
- 58: Lagerung
- 60: Parallelogrammanordnung
- 62: Stellglied
- 64: Haltevorrichtung (Halter Gebläse)

- 100: Dosiervorrichtung
- 102: Dosiereinheit
- 104: Zellenradschleuse
- 106: Gehäuse
- 108: Rotor
- 110: Fallschleuse

- 150: Verteilleitung
- 152: Verteilelement
- 154: Prallteller
- 156: Verteileinheit
- 158: Behälter
- 160: Abgang
- 162: Leitung

- 200: Strömungserzeugungseinrichtung
- 202: Luftstromteiler

- 250: Fördersystem
- 252: Verbindung (Rohr des Fördersystems)
- 254: Antriebssystem
- 256: Förderschnecke
- 258: Einlass; Auslass
- 260: Abdeckung

- 300: Stelleinrichtung

- 350: Datenverarbeitungseinrichtung
- 352: Ventil

- FR: Fahrtrichtung, Vorwärtsrichtung
- MA: Motorischer Antrieb

- α: Winkel α
- SP: Schwerpunkt

- S1: Sensoranordnung Ermittlung und/oder Auswertung Füllstand Behälter/ Verteileinheit
- S2: Sensoranordnung Ermittlung und/oder Auswertung Dosiermenge
- S3: Sensoranordnung Ermittlung und/oder Auswertung Streufächer
- S4: Sensoranordnung Ermittlung und/oder Auswertung Förderzeit / Durchflusszeit Streugut
- S5: Sensoranordnung Ermittlung und/oder Auswertung Höhenabstand
- S6: Sensoranordnung Ermittlung und/oder Auswertung Drehlage
- S7: Sensoranordnung Ermittlung und/oder Auswertung zurückgelegte Wegstrecke

- l1; l2: Länge Verteilleitung
- d1, d2: Querschnitt Verteilleitung
- t1, t2: Förderzeit Streugut / Durchflusszeit Streugut

## Patentansprüche

1. Steuerungs- und/oder Regelungssystem für einen pneumatischen Düngerstreuer zum Ausbringen von körnigem landwirtschaftlichen Streugut,
mit einer Datenverarbeitungseinrichtung (350), einem Vorratsbehälter (18) zum Mitführen und/oder Bereitstellen des Streuguts sowie einem sich quer zu einer Fahrtrichtung (FR) erstreckenden Verteilgestänge (50), an welchem Verteilgestänge (50) Verteilleitungen (150) mit Verteilelementen (152) zur Verteilung des Streuguts angeordnet sind und wobei zur Förderung des Streuguts zu den Verteilelementen (152), die Verteilleitungen (150) mit einem Luftvolumenstrom beaufschlagbar sind,
mit einer Ermittlung und/oder Auswertung der Förderzeit (t1; t2) des Streuguts von einer Dosiervorrichtung (100) entlang der Verteilleitung (150) bis zum Verteilelement (152) sowie einer zurückgelegten Wegstrecke der Verteilmaschine (10) pro Zeiteinheit durch die Datenverarbeitungseinrichtung (350),
wobei entsprechend eines in der Datenverarbeitungseinrichtung (350) hinterlegten Steuerungs- und/oder Regelungsprogramms anhand der Förderzeit (t1; t2) und der pro Zeiteinheit zurückgelegten Wegstrecke der optimale Ein- und Ausschaltpunkt der Dosiervorrichtung (100) berechenbar und/oder ausgebbar ist, **dadurch gekennzeichnet,**
**dass** am Verteilgestänge eine Mehrzahl an Verteilleitungen (150) mit unterschiedlichen Längen (l1; l2) und/oder unterschiedlichen Querschnitten (d1; d2) angeordnet sind und/oder dass diese mit unterschiedlichen Luftvolumenströmen beaufschlagbar sind, wobei die Förderzeit (t1; t2) in Abhängigkeit der Querschnitte (d1; d2), der Längen (l1; l2) und der Luftvolumenströme variiert.

2. System nach Anspruch 1, **dadurch gekennzeichnet, dass** eine Ermittlung und/oder Auswertung der Förderzeit (t1; t2) auf Basis von in der Datenverarbeitungseinrichtung (350) hinterlegten Kennwerten erfolgt, wobei die Kennwerte Angaben zur Länge (11; l2) der Verteilleitung (150) und/oder des Querschnitts (d1; d2) der Verteilleitung (150) und/oder des in der Verteilleitung (150) vorhandenen Luftvolumenstroms umfassen.

3. System nach einem der vorhergehenden Ansprüche, **dadurch gekennzeichnet, dass** die Ermittlung und/oder Auswertung der Förderzeit (t1; t2) mittels einer Sensoranordnung (S4) zur Ermittlung und/oder Auswertung der Förderzeit (t1; t2) erfolgt, welche Sensoranordnung (S4) zumindest einen oder mehrere Sensoren umfasst.

4. System nach Anspruch 3, **dadurch gekennzeichnet, dass** die Sensoranordnung (S4) zur Ermittlung und/oder Auswertung der Förderzeit (t1; t2) zumindest einen dem Verteilelement (152) zugeordneten Sensor zur Erfassung des Streuguts umfasst und/oder dass die Sensoranordnung (S4) zur Ermittlung und/oder Auswertung der Förderzeit (t1; t2) zumindest einen der Dosiervorrichtung (100) nachgeordneten und/oder mit dieser gekoppelten Sensor zur Erfassung des Streuguts umfasst.

5. System nach einem der vorhergehenden Ansprüche, **dadurch gekennzeichnet, dass** die Ermittlung und/oder Auswertung der zurückgelegten Wegstrecke pro Zeiteinheit mittels einer Sensoranordnung (S7) zur Ermittlung und/oder Auswertung der zurückgelegten Wegstrecke pro Zeiteinheit erfolgt, welche Sensoranordnung (S7) zumindest einen oder mehrere Sensoren umfasst.

6. System nach Anspruch 5, **dadurch gekennzeichnet, dass** die Sensoranordnung (S7) zur Ermittlung und/oder Auswertung der zurückgelegten Wegstrecke pro Zeiteinheit zumindest einen Sensor zur Erfassung einer Fahrgeschwindigkeit der Verteilmaschine (10) umfasst, wobei mittels des in der Datenverarbeitungseinrichtung (350) hinterlegten Steuerungs- und/oder Regelungsprogramms auf Basis der Fahrgeschwindigkeit die zurückgelegte Wegstrecke pro Zeiteinheit berechenbar ist.

7. System nach Anspruch 5, **dadurch gekennzeichnet, dass** die Sensoranordnung (S7) zur Ermittlung und/oder Auswertung der zurückgelegten Wegstrecke pro Zeiteinheit zumindest einen, dem Verteilgestänge (50) zugeordneten Sensor zur Erfassung einer Geschwindigkeit des Verteilgestänges (50) umfasst, wobei mittels des in der Datenverarbeitungseinrichtung (350) hinterlegten Steuerungs- und/oder Regelungsprogramms auf Basis der Geschwindigkeit die zurückgelegte Wegstrecke pro Zeiteinheit berechenbar ist.

8. System nach Anspruch 7, **dadurch gekennzeichnet, dass** der Sensor am linken und/oder am rechten Außenbereich des Verteilgestänges (50) angebracht ist und/oder dass zumindest ein Sensor am Mittelteil angebracht ist.

9. System nach Anspruch 5, **dadurch gekennzeichnet, dass** mittels der Sensoranordnung (S7) zur Ermittlung und/oder Auswertung der zurückgelegten Wegstrecke pro Zeiteinheit erfassbar ist, ob die Verteilmaschine (10) eine Kurve durchfährt und wobei mittels des in der Datenverarbeitungseinrichtung (350) hinterlegten Steuerungs- und/oder Regelungsprogramms für die Dosiervorrichtungen (100) der Verteilleitungen (150) im Kurveninneren andere Ein- und Ausschaltpunkte berechenbar und/oder ausgebbar sind als für die Dosiervorrichtungen (100) der Verteilleitungen (150) im Kurvenäußeren.

10. System nach Anspruch 9, **dadurch gekennzeichnet, dass** den Verteilleitungen (150) mittels der Dosiervorrichtung (100) im Kurveninneren weniger Streugut zuführbar ist als den Verteilleitungen (150) im Kurvenäußeren.

11. System nach einem der Ansprüche 9 oder 10, **dadurch gekennzeichnet, dass** mittels der Sensoranordnung (S7) zur Ermittlung und/oder Auswertung der zurückgelegten Wegstrecke pro Zeiteinheit und des in der Datenverarbeitungseinrichtung hinterlegten Steuerungs- und/oder Regelungsprogramms auswertbar ist, ob die Verteilmaschine (10) mit konstanter Geschwindigkeit und/oder mit einer Beschleunigung oder mit einer Verzögerung bewegt wird und wobei auf Basis dieser ein voreilender oder nacheilender Ein- oder Ausschaltpunkt der Dosiervorrichtung (100) berechenbar und/oder ausgebbar ist.

12. System nach einem der vorhergehenden Ansprüche, **dadurch gekennzeichnet, dass** die Datenverarbeitungseinrichtung (350) mit einem Positionsbestimmungssystem verbindbar ist, wobei mittels der Datenverarbeitungseinrichtung (350) und dem Positionsbestimmungssystem Sollpositionen für die Verteilung von Streugut generierbar sind.

13. System nach Anspruch 12, **dadurch gekennzeichnet, dass** entsprechend eines in der Datenverarbeitungseinrichtung hinterlegten Steuerungs- und/oder Regelungsprogramms anhand der Förderzeit (t1; t2), der pro Zeiteinheit zurückgelegten Wegstrecke sowie der Sollposition für die Verteilung von Streugut der optimale Ein- und Ausschaltpunkt der Dosiervorrichtung (100) berechenbar und/oder ausgebbar ist.

14. System nach einem der vorhergehenden Ansprüche, **dadurch gekennzeichnet, dass** mittels einer mit dem Verteilgestänge (50) eine bauliche Einheit bildenden Dosiervorrichtung (100) Streugut in die Verteilleitungen (150) dosierbar ist.

15. System nach Anspruch 14, **dadurch gekennzeichnet, dass** die Versorgung der Dosiervorrichtung (100) mit dem jeweiligen Streugut mittels eines mit dem Vorratsbehälter (18) wirkverbundenen Fördersystems (250) erfolgt.

16. System nach einem der vorhergehenden Ansprüche, **dadurch gekennzeichnet, dass** die Beaufschlagung der Verteilleitung (150) mit einem Luftvolumenstrom mittels einer Strömungserzeugungseinrichtung (200) erfolgt, wobei die Strömungserzeugungseinrichtung (200) derartig betreibbar ist, dass mittels dieser unterschiedliche Strömungsgeschwindigkeiten eines Luftvolumenstroms erzeugbar sind, wobei hierfür die Strömungserzeugungseinrichtung mittels eines motorischen Antriebs (MA) mit verschiedenen Drehzahlen betreibbar ist.

17. System nach einem der vorhergehenden Ansprüche, **dadurch gekennzeichnet, dass** das Verteilgestänge (50) einen Träger (52), ein Mittelteil (54) und schwenkbar am Mittelteil (54) angebrachte Seitenausleger (56) aufweist.

18. System nach einem der vorhergehenden Ansprüche, **dadurch gekennzeichnet, dass** das Verteilgestänge (50) mittels einer Lagerung (58) quer zu einer Fahrrichtung (FR) drehbar am Träger (52) angebracht ist, wobei zur Steuer- und/oder Regelbarkeit der Drehlage des Verteilgestänges (50) eine Stelleinrichtung (300) zwischen dem Mittelteil (54) des Verteilgestänges (50) und dem Träger (52) oder zwischen dem Mittelteil (54) des Verteilgestänges (50) und der Rahmenkonstruktion (12) angeordnet ist.

19. System nach einem der vorhergehenden Ansprüche, **dadurch gekennzeichnet, dass** die Höhenlage des Verteilgestänges (50) steuer- und/oder regelbar ist, insbesondere dass die Höhenlage des Verteilgestänges (50) zu einer Rahmenkonstruktion (12) der Verteilmaschine (10) steuer- und/oder regelbar ist, wobei die Steuerung und/oder Regelung der Höhenlage mittels eines zwischen der Rahmenkonstruktion (12) und einem Träger (52) des Verteilgestänges (50) angeordneten Parallelogramms (60) und/oder einer Lineareinheit erfolgt und wobei dem Parallelogramm (60) und/oder der Lineareinheit zumindest ein Stellglied (62) zum Verschwenken des Parallelogramms und/oder zur Verstellung der Lineareinheit zugeordnet ist.

20. Landwirtschaftliche Verteilmaschine (10) zum Ausbringen von körnigem landwirtschaftlichem Streugut, mit einem Steuerungs- und/oder Regelungssystem nach einem der vorhergehenden Ansprüche, **dadurch gekennzeichnet, dass** diese als ein pneumatischer Düngerstreuer ausgebildet ist.

21. Verteilmaschine (10) nach Anspruch 20, **dadurch gekennzeichnet, dass** diese als ein selbstfahrender oder als ein mittels Zugfahrzeug koppelbarer bzw. gezogener oder als an einem Zugfahrzeug anbaubarer bzw. angebauter Düngerstreuer (10) ausgebildet ist.

22. Verfahren zur Steuerung- und/oder Regelung einer landwirtschaftlichen Verteilmaschine (10) zum Ausbringen von körnigem landwirtschaftlichen Streugut in Form eines pneumatischen Düngerstreuers, mit einer Datenverarbeitungseinrichtung (350), einem Vorratsbehälter (18) zum Mitführen und/oder Bereitstellen des Streuguts sowie einem sich quer zu einer Fahrtrichtung (FR) erstreckenden Verteilgestänge (50), an welchem Verteilgestänge (50) Verteilleitungen (150) mit Verteilelementen (152) zur Verteilung des Streuguts angeordnet sind, wobei zur Förderung des Streuguts zu den Verteilelementen (152) die Verteilleitungen (150) mit einem Luftvolumenstrom beaufschlagbar sind, wobei am Verteilgestänge eine Mehrzahl an Verteilleitungen (150) mit unterschiedlichen Längen (l1; l2) und/oder unterschiedlichen Querschnitten (d1; d2) angeordnet sind und/oder dass diese mit unterschiedlichen Luftvolumenströmen beaufschlagbar sind, wobei die Förderzeit (t1; t2) in Abhängigkeit der Querschnitte (d1; d2), der Längen (l1; l2) und der Luftvolumenströme variiert, wobei das Verfahren die folgenden Schritte vorsieht:
- eine Ermittlung und/oder Auswertung der Förderzeit (t1; t2) des Streuguts von einer Dosiervorrichtung (100) entlang der Verteilleitung (150) bis zum Verteilelement (152),
- eine Ermittlung und/oder Auswertung einer zurückgelegten Wegstrecke der Verteilmaschine (10) pro Zeiteinheit
- sowie eine Berechnung und/oder Ausgabe von Ein- und Ausschaltpunkten einer Dosiervorrichtung auf Basis einer Förderzeit (t1; t2) und der pro Zeiteinheit zurückgelegten Wegstrecke mittels eines in einer Datenverarbeitungseinrichtung (350) hinterlegten Steuerungs- und/oder Regelungsprogramms.

## Claims

1. A control system and/or adjustment system for a pneumatic fertiliser spreader for spreading granular agricultural spreading material,
with a data processing device (350), a storage hopper (18) for carrying along and/or supplying the spreading material, as well as with a distribution boom (50) extending transverse to a driving direction (FR), on which distribution boom (50) distribution tubes (150) are arranged with distribution elements (152) for the distribution of the spreading material, and wherein the distribution tubes (150) are suppliable with an air volume flow for conveying the spreading material to the distribution elements (152),
with a determination and/or evaluation by the data processing device (350) of the conveying time (t1; t2) for the spreading material from a metering device (100) along the distribution tube (150) to the distribution element (152), as well as of distance covered per time unit by the distribution machine (10),
wherein the optimal switch-on point and switch-off point of the metering device (100) is calculable and/or outputable on the basis of the conveying time (t1; t2) and the distance covered per time unit in accordance with a control program and/or adjustment program stored in the data processing device (350), **characterised in that**
a plurality of distribution tubes (150) of different lengths (l1; l2) and/or different cross sections (d1; d2) are arranged on the distribution boom and/or **in that** these are suppliable with different air volume flows, wherein the conveying time (t1; t2) varies based on the cross sections (d1; d2), the lengths (l1; l2), and the air volume flows.

2. The system according to claim 1, **characterised in that** a determination and/or evaluation of the conveying time (t1; t2) is carried out based on characteristic values stored in the data processing device (350), wherein the characteristic values comprise information on the length (l1; l2) of the distribution tube (150) and/or of the cross-section (d1; d2) of the distribution tube (150) and/or on the air volume flow present in the distribution tube (150).

3. The system according to one of the previous claims, **characterised in that** the determination and/or evaluation of the conveying time (t1; t2) is carried out by means of a sensor arrangement (S4) for the determination and/or evaluation of the conveying time (t1; t2), which sensor arrangement (S4) comprises at least one or more sensors.

4. The system according to claim 3, **characterised in that** the sensor arrangement (S4) for the determination and/or evaluation of the conveying time (t1; t2) comprises at least one sensor assigned to the distribution element (152) for the detection of the spreading material, and/or **in that** the sensor arrangement (S4) for the determination and/or evaluation of the conveying time (t1; t2) comprises at least one sensor for the detection of the spreading material, the sensor arranged downstream of and/or being coupled to the metering device (100).

5. The system according to one of the previous claims, **characterised in that** the determination and/or evaluation of the covered distance per time unit is carried out by means of a sensor arrangement (S7) for the determination and/or evaluation of the covered distance per time unit, which sensor arrangement (S7) comprises at least one or more sensors.

6. The system according to claim 5, **characterised in that** the sensor arrangement (S7) for the determination and/or evaluation of the distance covered per time unit comprises at least one sensor for the detection of a driving speed of the distribution machine (10), wherein the distance covered per time unit is calculable based on the driving speed by means of the control program and/or adjustment program stored in the data processing device (350).

7. The system according to claim 5, **characterised in that** the sensor arrangement (S7) for the determination and/or evaluation of the distance covered per time unit comprises at least one sensor assigned to the distribution boom (50) for the detection of a speed of the distribution boom (50), wherein the distance covered per time unit is calculable based on the speed by means of the control program and/or adjustment program stored in the data processing device (350).

8. The system according to claim 7, **characterised in that** the sensor is arranged at the left and/or right outer area of the distribution boom (50) and/or **in that** at least one sensor is arranged at the central part.

9. The system according to claim 5, **characterised in that** it is detectable by means of the sensor arrangement (S7) for the determination and/or evaluation of the distance covered per time unit whether the distribution machine (10) is driving a curve, and wherein other switch-on points and switch-off points are calculable and/or outputable by means of the control program and/or adjustment program stored in the data processing device (350) for the metering devices (100) of the distribution tubes (150) in the curve inside than for the metering devices (100) of the distribution tubes (150) in the curve outside.

10. The system according to claim 9, **characterised in that** less spreading material is suppliable by means of the metering device (100) to the distribution tubes (150) in the curve inside than to the distribution tubes (150) in the curve outside.

11. The system according to one of the claims 9 or 10, **characterised in that** it is evaluable by means of the sensor arrangement (S7) for the determination and/or evaluation of the distance covered per time unit and by means of the control program and/or adjustment program stored in the data processing device, whether the distribution machine (10) is moved at a constant speed and/or with an acceleration or with a deceleration, and wherein a preceding or succeeding switch-on point or switch-off point of the metering device (100) is calculable and/or outputable based thereon.

12. The system according to one of the previous claims, **characterised in that** the data processing device (350) is connectable to a positioning system, wherein target positions for the distribution of spreading material are generatable by means of the data processing device (350) and the positioning system.

13. The system according to claim 12, **characterised in that** the optimal switch-on point and switch-off point of the metering device (100) is calculable and/or outputable on the basis of the conveying time (t1; t2), the distance covered per time unit, and the target position for the distribution of spreading material in accordance with a control program and/or adjustment program stored in the data processing device (350).

14. The system according to one of the previous claims, **characterised in that** spreading material is meterable into the distribution tubes (150) by means of a metering device (100) forming a constructional unit with the distribution boom (50).

15. The system according to claim 14, **characterised in that** the supply of the metering device (100) with the particular spreading material is carried out by means of a conveyor system (250) that is operatively connected to the storage hopper (18).

16. The system according to one of the previous claims, **characterised in that** the supply of the distribution tube (150) with an air volume flow is carried out by means of a flow generation device (200), wherein the flow generation device (200) is operable in such a manner that different flow velocities of an air volume flow generatable by means of thereof, wherein the flow generation device is operable by means of a motor drive (MA) with different speeds for this purpose.

17. The system according to one of the previous claims, **characterised in that** the distribution boom (50) has a carrier (52), a central part (54), and side booms (56) swivelably arranged at the central part (54).

18. The system according to one of the previous claims, **characterised in that** the distribution boom (50) is arranged on the carrier (52) by means of a bearing (58) so as to be rotatable transversely to a driving direction (FR), wherein, for the controllability and/or adjustability of the rotational position of the distribution boom (50), an adjustment device (300) is arranged between the central part (54) of the distribution boom (50) and the carrier (52) or between the central part (54) of the distribution boom (50) and the frame structure (12).

19. The system according to one of the previous claims, **characterised in that** the height position of the distribution boom (50) is controllable and/or adjustable, in particular, **in that** the height position of the distribution boom (50) in relation to a frame structure (12) of the distribution machine (10) is controllable and/or adjustable, wherein the control and/or adjustment of the height position is carried out by means of a parallelogram linkage (60) and/or of a linear unit arranged between the frame structure (12) and a carrier (52) of the distribution boom (50), and wherein at least one actuator (62) is assigned to the parallelogram linkage (60) and/or to the linear unit for the swivelling of the parallelogram linkage and/or for the adjustment of the linear unit.

20. An agricultural distribution machine (10) for spreading granular agricultural spreading material, with a control system and/or adjustment system according to one of the previous claims, **characterised in that** this distribution machine (10) is designed as a pneumatic fertiliser spreader.

21. The distribution machine (10) according to claim 20, **characterised in that** this distribution machine (10) is designed as a self-propelled fertiliser spreader (10) or as a fertiliser spreader (10) which is coupleable to or towed by a towing vehicle or which can be attached or mounted to a towing vehicle.

22. A method for the control and/or adjustment of an agricultural distribution machine (10) for spreading granular agricultural spreading material, the distribution machine being in the form of a pneumatic fertiliser spreader, with a data processing device (350), a storage hopper (18) for carrying along and/or supplying the spreading material, as well as with a distribution boom (50) extending transverse to a driving direction (FR), on which distribution boom (50) distribution tubes (150) are arranged with distribution elements (152) for the distribution of the spreading material, wherein the distribution tubes (150) are suppliable with an air volume flow for conveying the spreading material to the distribution elements (152), wherein a plurality of distribution tubes (150) of different lengths (l1; l2) and/or different cross-sections (d1; d2) are arranged on the distribution boom, and/or in that these are suppliable with different air volume flows, wherein the conveying time (t1; t2) varies based on the cross sections (d1; d2), the lengths (l1; l2), and the air volume flows, wherein the method provides the following method steps:
- a determination and/or evaluation of the conveying time (t1; t2) for the spreading material from a metering device (100) along the distribution tube (150) to the distribution element (152),
- a determination and/or evaluation of a distance covered per time unit by the distribution machine (10),
- as well as a calculation and/or output by means of a control program and/or adjustment program stored in the data processing device (350) of switch-on points and switch-off points of the metering device based on a conveying time (t1; t2) and the distance covered per time unit.

## Revendications

1. Système de commande et/ou de régulation pour un épandeur d'engrais pneumatique, destiné à l'épandage de produits agricoles granuleux,
doté d'un dispositif de traitement de données (350), d'un réservoir (18) pour transporter et/ou mettre à disposition le produit à épandre, ainsi que d'une tringlerie d'épandage (50) s'étendant transversalement à un sens de marche (FR), sur laquelle tringlerie d'épandage (50) sont disposées des conduites de distribution (150) dotées d'éléments de distribution (152) pour distribuer ledit produit à épandre et, pour convoyer le produit à épandre vers les éléments de distribution (152), les conduites de distribution (150) pouvant être alimentées par un flux volumique d'air,
doté d'une détermination et/ou évaluation, par le dispositif de traitement de données (350), du temps de convoyage (t1 ; t2) que met le produit à épandre partant d'un dispositif de dosage (100) jusqu'à l'élément de distribution (152) en passant le long de la conduite de distribution (150), ainsi que d'un trajet parcouru par l'épandeur (10) par unité de temps,
le point optimal d'activation et de désactivation du dispositif de dosage (100) pouvant être calculé et/ou émis en fonction d'un programme de commande et/ou de régulation stocké dans le dispositif de traitement de données (350) à l'aide du temps de convoyage (t1 ; t2) et du trajet parcouru par unité de temps, **caractérisé en ce**
**qu'**une pluralité de conduites de distribution (150) de différentes longueurs (l1 ; l2) et/ou de différentes sections transversales (d1 ; d2) sont disposées sur la tringlerie d'épandage, et/ou que celles-ci peuvent être alimentées par différents flux volumiques d'air, le temps de convoyage (t1 ; t2) variant en fonction des sections transversales (d1 ; d2), des longueurs (l1 ; l2) et des flux volumiques d'air.

2. Système selon la revendication 1, **caractérisé en ce qu'**une détermination et/ou évaluation du temps de convoyage (t1 ; t2) s'effectue sur la base des valeurs caractéristiques stockées dans le dispositif de traitement de données (350), lesdites valeurs caractéristiques comprenant des données relatives à la longueur (l1 ; l2) de la conduite de distribution (150) et/ou à la section transversale (d1 ; d2) de la conduite de distribution (150) et/ou au flux volumique d'air présent dans la conduite de distribution (150).

3. Système selon l'une quelconque des revendications précédentes, **caractérisé en ce que** la détermination et/ou l'évaluation du temps de convoyage (t1 ; t2) s'effectuent au moyen d'un agencement de capteurs (S4) destinés à déterminer et/ou évaluer le temps de convoyage (t1 ; t2), ledit agencement de capteurs (S4) comprenant au moins un ou plusieurs capteurs.

4. Système selon la revendication 3, **caractérisé en ce que** ledit agencement de capteurs (S4) destinés à déterminer et/ou évaluer le temps de convoyage (t1 ; t2) comprend au moins un capteur associé à l'élément de distribution (152) pour déterminer le produit à épandre, et/ou que ledit agencement de capteurs (S4) destinés à déterminer et/ou évaluer le temps de convoyage (t1 ; t2) comprend au moins un capteur agencé en aval du dispositif de dosage (100) et/ou couplé à celui-ci, pour détecter le produit à épandre.

5. Système selon l'une quelconque des revendications précédentes, **caractérisé en ce que** la détermination et/ou l'évaluation du trajet parcouru par unité de temps s'effectue au moyen d'un agencement de capteurs (S7) destinés à déterminer et/ou évaluer le trajet parcouru par unité de temps, ledit agencement de capteurs (S7) comprenant au moins un ou plusieurs capteurs.

6. Système selon la revendication 5, **caractérisé en ce que** l'agencement de capteurs (S7) destinés à déterminer et/ou évaluer le trajet parcouru par unité de temps comprend au moins un capteur destiné à détecter une vitesse de marche de l'épandeur (10), le trajet parcouru par unité de temps pouvant être calculé sur la base de la vitesse de marche au moyen du programme de commande et/ou de régulation stocké dans le dispositif de traitement de données (350).

7. Système selon la revendication 5, **caractérisé en ce que** l'agencement de capteurs (S7) destinés à déterminer et/ou évaluer le trajet parcouru par unité de temps comprend au moins un capteur, associé à la tringlerie d'épandage (50), destiné à détecter une vitesse de la tringlerie d'épandage (50), le trajet parcouru par unité de temps pouvant être calculé sur la base de la vitesse au moyen du programme de commande et/ou de régulation stocké dans le dispositif de traitement de données (350).

8. Système selon la revendication 7, **caractérisé en ce que** le capteur est monté sur la zone extérieure gauche et/ou droite de la tringlerie d'épandage (50), et/ou qu'au moins un capteur est monté sur la partie médiane.

9. Système selon la revendication 5, **caractérisé en ce que** l'agencement de capteurs (S7) destinés à déterminer et/ou évaluer le trajet parcouru par unité de temps permet de détecter si l'épandeur (10) se trouve dans un virage, et le programme de commande et/ou de régulation pour les dispositifs de dosage (100) des conduites de distribution (150) stocké dans le dispositif de traitement de données (350) permettant de calculer et/ou d'émettre à l'intérieur du virage d'autres points d'activation et de désactivation que pour les dispositifs de dosages (100) des conduites de distribution (150) à l'extérieur du virage.

10. Système selon la revendication 9, **caractérisé en ce qu'**au moyen du dispositif de dosage (100), moins de produit à épandre peut être amené aux conduites de distribution (150) à l'intérieur du virage qu'aux conduites de distribution (150) à l'extérieur du virage.

11. Système selon l'une quelconque des revendications 9 ou 10, **caractérisé en ce que** l'agencement de capteurs (S7) destinés à déterminer et/ou évaluer le trajet parcouru par unité de temps et le programme de commande et/ou de régulation stocké dans le dispositif de traitement des données permettent d'évaluer si l'épandeur (10) est déplacé à vitesse constante et/ou avec une accélération ou avec une décélération et, sur la base de cela, un point d'activation ou de désactivation du dispositif de dosage (100) en avance ou avec retardement pouvant être calculé et/ou émis.

12. Système selon l'une quelconque des revendications précédentes, **caractérisé en ce que** le dispositif de traitement de données (350) peut être connecté à un système de détermination de position, le dispositif de traitement de données (350) et le système de détermination de position permettant de générer des positions de consigne pour épandre le produit à épandre.

13. Système selon la revendication 12, caractérisé en ce le point optimal d'activation et de désactivation du dispositif de dosage (100) peut être calculé et/ou émis en fonction d'un programme de commande et/ou de régulation stocké dans le dispositif de traitement des données à l'aide du temps de convoyage (t1 ; t2), du trajet parcouru par unité de temps, ainsi que de la position de consigne pour l'épandage de produit à épandre.

14. Système selon l'une quelconque des revendications précédentes, **caractérisé en ce qu'**il est possible de verser des doses de produit à épandre dans les conduites de distribution (150) au moyen d'un dispositif de dosage (100) constituant une unité de construction avec la tringlerie d'épandage (50).

15. Système selon la revendication 14, **caractérisé en ce que** l'alimentation du dispositif de dosage (100) en produit à épandre respectif s'effectue au moyen d'un système de convoyage (250) en liaison active avec le réservoir (18).

16. Système selon l'une quelconque des revendications précédentes, **caractérisé en ce que** l'alimentation de la conduite de distribution (150) par un flux volumique d'air s'effectue au moyen d'un dispositif de génération de flux (200), ledit dispositif de génération de flux (200) pouvant être exploité de telle sorte qu'il permette de générer différentes vitesses de flux d'un flux volumique d'air, ledit dispositif de génération de flux pouvant à cet effet être exploité à différentes vitesses de rotation au moyen d'un entraînement motorisé (MA).

17. Système selon l'une quelconque des revendications précédentes, **caractérisé en ce que** la tringlerie d'épandage (50) présente un support (52), une partie médiane (54) et des bras latéraux (56) montés pivotants sur la partie médiane (54).

18. Système selon l'une quelconque des revendications précédentes, **caractérisé en ce que** la tringlerie d'épandage (50) est montée, grâce à un palier (58), sur le support (52) de manière à pouvoir tourner transversalement à un sens de marche (FR), un dispositif de réglage (300) étant disposé entre la partie médiane (54) de la tringlerie d'épandage (50) et le support (52) ou entre la partie médiane (54) de la tringlerie d'épandage (50) et la structure de châssis (12) pour pouvoir commander et/ou régler la position de rotation de la tringlerie d'épandage (50).

19. Système selon l'une quelconque des revendications précédentes, **caractérisé en ce que** la position en hauteur de la tringlerie d'épandage (50) peut être commandée et/ou réglée, notamment **en ce que** la position en hauteur de la tringlerie d'épandage (50) peut être commandée et/ou réglée par rapport à une structure de châssis (12) de l'épandeur (10), la commande et/ou la régulation de la position en hauteur s'effectuant au moyen d'un parallélogramme (60) et/ou d'une unité linéaire disposés entre la structure de châssis (12) et un support (52) de la tringlerie d'épandage (50), et au parallélogramme (60) et/ou à l'unité linéaire étant associé au moins un organe de réglage (62) pour le pivotement du parallélogramme et/ou pour le réglage de l'unité linéaire.

20. Épandeur agricole (10) destiné à l'épandage de produits agricoles granuleux, doté d'un système de commande et/ou de régulation selon l'une quelconque des revendications précédentes, **caractérisé en ce que** celui-ci est conçu sous forme d'épandeur d'engrais pneumatique.

21. Épandeur (10) selon la revendication 20, **caractérisé en ce que** celui-ci est conçu sous forme d'épandeur d'engrais (10) automoteur ou pouvant être couplé ou tracté au moyen d'un véhicule tracteur ou pouvant être monté ou attelé à un véhicule tracteur.

22. Procédé de commande et/ou de régulation d'un épandeur agricole (10) destiné à l'épandage de produits agricoles granuleux, sous la forme d'un épandeur d'engrais pneumatique, doté d'un dispositif de traitement de données (350), d'un réservoir (18) pour transporter et/ou mettre à disposition du produit à épandre, ainsi que d'une tringlerie d'épandage (50) s'étendant transversalement à un sens de marche (FR), des conduites de distribution (150) étant agencées sur ladite tringlerie d'épandage (50) avec des éléments de distribution (152) pour épandre le produit à épandre, les conduites de distribution (150) étant, pour convoyer le produit à épandre vers les éléments de distribution (152), alimentées par un flux volumique d'air, une pluralité de conduites de distribution (150) de différentes longueurs (l1 , l2) et/ou de différentes sections transversales (d1 ; d2) étant agencées sur la tringlerie d'épandage, et/ou que celles-ci peuvent être alimentées par des flux volumiques d'air différents, le temps de convoyage (t1 ; t2) variant en fonction des sections transversales (d1 ; d2), des longueurs (l1 ; l2) et des flux volumiques d'air, le procédé prévoyant les étapes suivantes :
- une détermination et/ou évaluation du temps de convoyage (t1 ; t2) du produit d'épandage partant d'un dispositif de dosage (100) jusqu'à l'élément de distribution (152) en passant le long de la conduite de distribution (150),
- une détermination et/ou évaluation d'un trajet parcouru de l'épandeur (10) par unité de temps,
- ainsi qu'un calcul et/ou une émission de points d'activation et de désactivation d'un dispositif de dosage sur la base d'un temps de convoyage (t1 , t2) et du trajet parcouru par unité de temps au moyen d'un programme de commande et/ou de régulation stocké dans un dispositif de traitement de données (350).
